# EUROPEAN PATENT SPECIFICATION

(11) **EP 1 639 020 B1**
(45) Date of publication and mention of the grant of the patent: **28.01.2015**
(21) Application number: 04777080.5
(22) Date of filing: 24.06.2004
(51) Int. Cl.: C08F 2/16, C08F 2/44, C08F 292/00, C08L 51/10, C09D 151/10

(54) **AQUEOUS DISPERSIONS OF MICROPARTICLES HAVING A NANOPARTICULATE PHASE AND COATING COMPOSITIONS CONTAINING THE SAME**
WÄSSRIGE DISPERSIONEN VON MIKROPARTIKELN MIT EINER NANOPARTIKULÄREN PHASE UND DIESE ENTHALTENDE BESCHICHTUNGSZUSAMMENSETZUNGEN
DISPERSIONS AQUEUSES DE MICROPARTICULES PRESENTANT UNE PHASE NANOPARTICULAIRE ET COMPOSITIONS DE REVETEMENT CONTENANT LESDITES DISPERSIONS

(30) Priority: 24.06.2003 US 482167 P
(43) Date of publication of application: 29.03.2006
(73) Proprietor: PPG Industries Ohio, Inc., Cleveland, OH 44111 (US)
(72) Inventor: FALER, Dennis L., Glenshaw, PA 15116 (US); KULFAN, Anthony D., Mars, PA 16046 (US); O'DWYER, James B., Valencia, PA 16059 (US); DECKER, Eldon L., Gibsonia, PA 15044 (US); WOODWORTH, Brian E., Pittsburgh, PA 15044 (US); RARDON, Lori S., Gibsonia, PA 15206 (US)
(74) Representative: f & e patent
(86) International application number: PCT/US2004/020412
(87) International publication number: WO 2005/000914

(56) References cited:
- EP-A- 1 371 694
- EP-A- 1 431 356
- EP-A1- 1 088 865
- WO-A-02/14391
- WO-A-03/095532
- WO-A-03/095571
- WO-A-2004/000916
- US-A1- 2002 149 002
- US-B1- 6 387 997
- US-B1- 6 416 818

## Description

### FIELD OF THE INVENTION

The present invention relates to aqueous dispersions of microparticles having a polymeric phase and a nanoparticulate phase and to the use of such dispersions in coating compositions.

### BACKGROUND OF THE INVENTION

Coating compositions typically include colorants as well as filler pigment particles dispersed in a resinous binder system to impart color and/or performance properties in the resulting coating. Pigment particles tend to have a strong affinity for each other and, unless separated, for example, by some other material, tend to clump together to form agglomerates.

Conventionally, these colorant and/or filler particles are dispersed in the resinous grind vehicles and, optionally, dispersants by milling or grinding using high shear techniques to break up the pigment particles. Pigments and fillers usually consist of solid crystalline particles ranging in diameter from about 0.02 to 2 microns (i.e., 20 to 2000 nanometers). "Nanoparticulate" pigments and filler materials usually have an average particle size of 300 nanometers or less, and typically have an average particle size of 100 nanometers or less. Agglomeration is a serious problem for nanoparticulate pigments and filler materials (such as carbon black) because these nanoparticulates have a relatively large surface area. Thus, acceptable dispersion of such nanoparticulate materials typically requires an inordinate amount of resinous grind vehicle and/or dispersant to effect de-agglomeration and to prevent subsequent re-agglomeration of the nanoparticulate material.

The presence of such high levels of resinous grind vehicles and dispersants, however, in the final coating compositions can be detrimental to the resultant coating. For example, high levels of dispersants, which typically comprise hydrophilic functional groups such as carboxylic acid and hydroxyl groups, have been known to contribute to water sensitivity of the resultant coating. Also, some resinous grind vehicles, for example, acrylic grind vehicles, can negatively impact coating performance properties such as chip resistance and flexibility.

Conventional pigment particles and agglomerates can have average particle sizes sufficientlly large to scatter visible light, thereby causing coatings to be hazy and dull. By contrast, pigments in the form of nanoparticulates generally provide more intense, brighter color, even when different pigment nanoparticulates are mixed to achieve intermediate colors.

Known in the art are inorganic pigment-loaded polymeric microcapsular systems prepared from opacifying pigment particles consisting essentially of discrete, substantially spherical microcapsules each having a solid, polymeric shell and a solid, polymeric core. Discrete, inorganic pigment particles are dispersed in the polymeric core of the microcapsules. The shell and core materials are comprised of different materials. Such inorganic pigment-loaded microcapsules provide a high degree of opacity and a predetermined degree of gloss to a substrate by varying the size of the microcapsules. The microcapsules are particularly useful for opacification of paper substrates.

Also known in the art are erasable ink compositions containing a dispersion of solid particles comprising water-insoluble polymer-encapsulated colorant particles. Such particles are obtained from the emulsion polymerization of polymerizable monomers in the presence of solid colorant particles. Since the colorant particles are encapsulated by polymer in these ink compositions, it is believed there is little opportunity for the particles to separate from the polymer and migrate into a porous substrate.

Ink compositions are known which are suitable for ink jet recording. Such compositions comprise a colorant (i.e., either a dye or a pigment), and a polymer covering the colorant, where the polymer has in its molecular chain sites possessing ultraviolet absorbing and/or photostabilizing activity, water, and a water-soluble organic solvent.

Further known in the art are composite colorant polymer particles having a colorant phase and a polymer phase, where the polymer phase is formed from polymerizable monomers in the presence of the colorant in situ using emulsion polymerization processes. In such processes, the monomer mixture is added to the colorant mixture continuously, and the composite polymer colorant particles are formed (i.e., the polymer and colorant are particularized) via this continuous emulsion polymerization process. The process produces a dispersion of composite colorant particles which is stable as defined by the particles not flocculating for up to 20 minutes when the dispersion is added to acetone at a 1% by weight concentration. Such dispersions of composite colorant polymer particles are useful as ink jet compositions, and are intended to provide improved properties over those formed from batch processes.

All of the above-described colorant-polymer particles require that the colorant, e.g., the pigment, be reduced to sub-micron size prior to forming the colorant-particles, typically by milling with a pigment dispersant in water and/or solvent. Moreover, the composite particles are formed via the polymerization process itself, that is, by continuously adding monomer to the colorant under polymerization conditions, or, alternatively, by simply coating/encapsulating the colorant particles with polymer. It would be desirable to provide an efficient process for forming a stable dispersion of composite microparticles suitable for use in coating compositions whereby the monomers and/or polymers and, if required, initiator, are admixed directly with the nanoparticulates, and the admixture is particularized by means other than emulsion polymerization, and optionally, thereafter subjected to radical polymerization conditions. It would also be desirable to provide a process for forming an aqueous dispersion of composite microparticles which does not require an amount of hydrophilic dispersant sufficient to render any coating compositions comprising such microparticles unduly water sensitive.

### SUMMARY OF THE INVENTION

The present invention is directed to a method for preparing a stable aqueous dispersion of microparticles comprising nanoparticulates. The dispersion is prepared by (a) providing a plurality of nanoparticulates having an average particle size of 300 nanometers or less; (b) admixing, optionally in the presence of an aqueous medium, the nanoparticulates with a mixture of one or more polymerizable unsaturated monomers with one or more polymers wherein the one or more polymers have a weight average molecular weight varying from 1000 to 20,000 to form an admixture; (c) subjecting said admixture to high stress shear conditions in the presence of an aqueous medium to particularize the admixture into microparticles; and (d) polymerizing the ethylenically unsaturated monomers under free radical polymerization conditions, wherein the microparticles comprise composite microparticles having a first phase comprising one or more polymers, and a second phase comprising the nanoparticulates.

In further embodiments, the present invention is directed to coating compositions comprising the previously mentioned aqueous dispersions of microparticles comprising nanoparticulates. The dispersions are prepared by the previously described method.

### DETAILED DESCRIPTION OF THE INVENTION

As previously mentioned, the present invention is directed to a method for preparing a stable aqueous dispersion of said microparticles comprising nanoparticulates and the stable aqueous dispersion of microparticles prepared by the method. The method comprises the steps of (a) providing a plurality of nanoparticulates having an average particle size of 300 nanometers or less, (b) admixing, optionally in the presence of an aqueous medium, said nanoparticulates with a mixture of one or more polymerizable unsaturated monomers with one or more of said polymers to form an admixture; (c) subjecting said admixture to high stress shear conditions in the presence of an aqueous medium to particularize the admixture into microparticles; and (d) polymerizing said ethylenically unsaturated monomers under free radical polymerization conditions to obtain said microparticles.

Nanoparticulates suitable for use in the present invention can include any of the nanosized inorganic, organic, or inorganic/organic hybrid materials known in the art.

In an embodiment where the average particle size of the particles is greater than 0.05 micron (that is, greater than 50 nanometers), the average particle size can be measured according to known laser scattering techniques. For example the average particle size of such particles is measured using a Horiba Model LA 900 laser diffraction particle size instrument, which uses a helium-neon laser with a wave length of 633 nm to measure the size of the particles and assumes the particle has a spherical shape, i.e., the "particle size" refers to the smallest sphere that will completely enclose the particle.

In an embodiment of the present invention wherein the size of the particles is less than or equal to one micron (that is, less than 1000 nanometers), the average particle size can be determined by visually examining an electron micrograph of a transmission electron microscopy ("TEM") image, measuring the diameter of the particles in the image, and calculating the average particle size based on the magnification of the TEM image. One of ordinary skill in the art will understand how to prepare such a TEM image, and a description of one such method is disclosed in the examples set forth below. In one non-limiting embodiment of the present invention, a TEM image with 105,000X magnification is produced, and a conversion factor is obtained by dividing the magnification by 1000. Upon visual inspection, the diameter of the particles is measured in millimeters, and the measurement is converted to nanometers using the conversion factor. The diameter of the particle refers to the smallest diameter sphere that will completely enclose the particle.

The shape (or morphology) of the particles can vary depending upon the specific embodiment of the present invention and its intended application. For example, generally spherical morphologies (such as solid beads, microbeads, or hollow spheres), can be used, as well as particles that are cubic, platy, or acicular (elongated or fibrous). Additionally, the particles can have an internal structure that is hollow, porous or void free, or a combination of any of the foregoing, e.g., a hollow center with porous or solid walls. For more information on suitable particle characteristics see H. Katz et al. (Ed.), Handbook of Fillers and Plastics (1987) at pages 9-10, which are specifically incorporated by reference herein.

Depending on the desired properties and characteristics of the resultant dispersion and/or coating compositions containing the dispersions of the present invention (e.g., coating hardness, scratch resistance, stability, or color), it will be recognized by one skilled in the art that mixtures of one or more particles having different average particle sizes can be employed in the process of the present invention.

The nanoparticles can be formed from materials selected from polymeric and nonpolymeric inorganic materials, polymeric and nonpolymeric organic materials, composite materials, and mixtures of any of the foregoing. As used herein, "formed from" denotes open, e.g., "comprising," claim language. As such, it is intended that a composition "formed from" a list of recited components be a composition comprising at least these recited components, and can further comprise other, non-recited components, during the composition's formation. Additionally, as used herein, the term "polymer" is meant to encompass oligomers, and includes without limitation both homopolymers and copolymers.

As used herein, the term "polymeric inorganic material" means a polymeric material having a backbone repeat unit based on an element or elements other than carbon. For more information see James Mark et al., Inorganic Polymers, Prentice Hall Polymer Science and Engineering Series, (1992) at page 5. Moreover, as used herein, the term "polymeric organic materials" means synthetic polymeric materials, semi-synthetic polymeric materials and natural polymeric materials, all of which have a backbone repeat unit based on carbon.

An "organic material," as used herein, means carbon containing compounds wherein the carbon is typically bonded to itself and to hydrogen, and often to other elements as well, and excludes binary compounds such as the carbon oxides, the carbides, carbon disulfide, etc.; such ternary compounds as the metallic cyanides, metallic carbonyls, phosgene, carbonyl sulfide, etc.; and carbon-containing ionic compounds such as metallic carbonates, for example calcium carbonate and sodium carbonate. See R. Lewis, Sr., Hawley's Condensed Chemical Dictionary, (12th Ed. 1993) at pages 761-762, and M. Silberberg, Chemistry The Molecular Nature of Matter and Change (1996) at page 586.

As used herein, the term "inorganic material" means any material that is not an organic material.

As used herein, the term "composite material" means a combination of two or more differing materials. The particles formed from composite materials generally have a hardness at their surface that is different from the hardness of the internal portions of the particle beneath its surface. More specifically, the surface of the particle can be modified in any manner well known in the art, including, but not limited to, chemically or physically changing its surface characteristics using techniques known in the art.

For example a particle can be formed from a primary material that is coated, clad or encapsulated with one or more secondary materials to form a composite particle that has a softer surface. In yet another alternative embodiment, particles formed from composite materials can be formed from a primary material that is coated, clad or encapsulated with a different form of the primary material. For more information on particles useful in the present invention, see G. Wypych, Handbook of Fillers, 2nd Ed. (1999) at pages 15-202.

As aforementioned, the nanoparticulates useful in the processes of the present invention can include any nanosized inorganic materials known in the art. Suitable particles can be formed from ceramic materials, metallic materials, and mixtures of any of the foregoing. Non-limiting examples of such ceramic materials can comprise metal oxides, mixed metal oxides, metal nitrides, metal carbides, metal sulfides, metal silicates, metal borides, metal carbonates, and mixtures of any of the foregoing. Specific, nonlimiting examples of metal nitrides are, for example boron nitride; specific, nonlimiting examples of metal oxides are, for example zinc oxide; nonlimiting examples of suitable mixed metal oxides include aluminum silicates and magnesium silicates; nonlimiting examples of suitable metal sulfides are, for example molybdenum disulfide, tantalum disulfide, tungsten disulfide, and zinc sulfide; nonlimiting suitable examples of metal silicates are, for example aluminum silicates and magnesium silicates such as vermiculite.

In an embodiment of the present invention the nanoparticulates comprise inorganic nanoparticles selected from aluminum, barium, bismuth, boron, cadmium, calcium, cerium, cobalt, copper, iron, lanthanum, magnesium, manganese, molybdenum, nitrogen, oxygen, phosphorus, selenium, silicon, silver, sulfur, tin, titanium, tungsten, vanadium, yttrium, zinc, and zirconium, including, where applicable, oxides thereof, nitrides thereof, phosphides thereof, phosphates thereof, selenides thereof, sulfides thereof, sulfates thereof, and mixtures thereof. Suitable non-limiting examples of the foregoing inorganic microparticles can include alumina, silica, titania, ceria, zirconia, bismuth oxide, magnesium oxide, iron oxide, aluminum silicate, boron carbide, nitrogen doped titania, and cadmium selenide.

The nanoparticulates can comprise, for example a core of essentially a single inorganic oxide such as silica in colloidal, fumed, or amorphous form, alumina or colloidal alumina, titanium dioxide, iron oxide, cesium oxide, yttrium oxide, colloidal yttria, zirconia, e.g., colloidal or amorphous zirconia, and mixtures of any of the foregoing; or an inorganic oxide of one type upon which is deposited an organic oxide of another type.

Nonpolymeric, inorganic materials useful in forming the nanoparticulates of the present invention can comprise inorganic materials selected from graphite, metals, oxides, carbides, nitrides, borides, sulfides, silicates, carbonates, sulfates, and hydroxides. A nonlimiting example of a useful inorganic oxide is zinc oxide. Nonlimiting examples of suitable inorganic sulfides include molybdenum disulfide, tantalum disulfide, tungsten disulfide, and zinc sulfide. Nonlimiting examples of useful inorganic silicates include aluminum silicates and magnesium silicates, such as vermiculite. Nonlimiting examples of suitable metals include molybdenum, platinum, palladium, nickel, aluminum, copper, gold, iron, silver, alloys, and mixtures of any of the foregoing.

In one embodiment of the present invention the nanoparticulates can be selected from fumed silica, amorphous silica, colloidal silica, alumina, colloidal alumina, titanium dioxide, iron oxide, cesium oxide, yttrium oxide, colloidal yttria, zirconia, colloidal zirconia, and mixtures of any of the foregoing. In another embodiment of the present invention the nanoparticulates comprise colloidal silica. As disclosed above, these materials can be surface treated or untreated. Other useful nanoparticulates include surface-modified silicas such as are described in U.S. Patent No. 5,853,809 at column 6, line 51 to column 8, line 43.

As another alternative, a nanoparticulate can be formed from a primary material that is coated, clad or encapsulated with one or more secondary materials to form a composite material that has a harder surface. Alternatively, a nanoparticulate can be formed from a primary material that is coated, clad or encapsulated with a differing form of the primary material to form a composite material that has a harder surface.

In one example, and without limiting the present invention, an inorganic nanoparticle formed from an inorganic material such as silicon carbide or aluminum nitride can be provided with a silica, carbonate or nanoclay coating to form a useful composite particle. In another nonlimiting example, a silane coupling agent with alkyl side chains can interact with the surface of an inorganic nanoparticle formed from an inorganic oxide to provide a useful composite particle having a "softer" surface. Other examples include cladding, encapsulating or coating particles formed from nonpolymeric or polymeric materials with differing nonpolymeric or polymeric materials. A specific nonlimiting example of such composite nanoparticles is DUALITE™, which is a synthetic polymeric particle coated with calcium carbonate that is commercially available from Pierce and Stevens Corporation of Buffalo, NY.

In one nonlimiting embodiment of the invention, the nanoparticles can have a lamellar structure. Particles having a lamellar structure are composed of sheets or plates of atoms in hexagonal array, with strong bonding within the sheet and weak van der Waals bonding between sheets, providing low shear strength between sheets. A nonlimiting example of a lamellar structure is a hexagonal crystal structure. Inorganic solid particles having a lamellar fullerene (i.e., buckyball) structure are also useful in the present invention.

Nonlimiting examples of suitable materials having a lamellar structure that are useful in forming the particles of the present invention include boron nitride, graphite, metal dichalcogenides, mica, talc, gypsum, kaolinite, calcite, cadmium iodide, silver sulfide and mixtures thereof. Suitable metal dichalcogenides include molybdenum disulfide, molybdenum diselenide, tantalum disulfide, tantalum diselenide, tungsten disulfide, tungsten diselenide and mixtures thereof.

The nanoparticles can be formed from nonpolymeric, organic materials. Nonlimiting examples of nonpolymeric, organic materials useful in the present invention include, but are not limited to, stearates (such as zinc stearate and aluminum stearate), diamond, carbon black and stearamide. In an embodiment of the present invention, the nanoparticulates comprise carbon black.

The nanoparticles can be formed from inorganic polymeric materials. Nonlimiting examples of useful inorganic polymeric materials include polyphosphazenes, polysilanes, polysiloxanes, polygermanes, polymeric sulfur, polymeric selenium, silicones and mixtures of any of the foregoing. A specific, nonlimiting example of a particle formed from an inorganic polymeric material suitable for use in the present invention is Tospearl¹, which is a particle formed from cross-linked siloxanes and is commercially available from Toshiba Silicones Company, Ltd. of Japan.

The nanoparticles can be formed from synthetic, organic polymeric materials. Nonlimiting examples of suitable organic polymeric materials include, but are not limited to, thermoset materials and thermoplastic materials as discussed herein. Nonlimiting examples of suitable thermoplastic materials include thermoplastic polyesters such as polyethylene terephthalate, polybutylene terephthalate and polyethylene naphthalate, polycarbonates, polyolefins such as polyethylene, polypropylene and polyisobutene, acrylic polymers such as copolymers of styrene and an acrylic acid monomer and polymers containing methacrylate, polyamides, thermoplastic polyurethanes, vinyl polymers, and mixtures of any of the foregoing.

Nonlimiting examples of suitable thermoset materials include thermoset polyesters, vinyl esters, epoxy materials, phenolics, aminoplasts, thermoset polyurethanes and mixtures of any of the foregoing. A specific, nonlimiting example of a synthetic polymeric particle formed from an epoxy material is an epoxy microgel particle.

The nanoparticles can also be hollow particles formed from materials selected from polymeric and nonpolymeric inorganic materials, polymeric and nonpolymeric organic materials, composite materials and mixtures of any of the foregoing. Nonlimiting examples of suitable materials from which the hollow particles can be formed are described above.

Organic materials useful in the practice of the present invention can include organic pigments, for example, azo (monoazo, disazo, β-Naphthol, Naphthol AS salt type azo pigment lakes), benzimidazolone,disazo condensation, isoindolinone, isoindoline), and polycyclic (phthalocyanine,
1 See R. J. Perry "Applications for Cross-Linked Siloxane Particles" Chemtech, February 1999 at pages 39-44. quinacridone, perylene, perinone, diketopyrrolo pyrrole, thioindigo, anthraquinone (indanthrone, anthrapyrimidine, flavanthrone, pyranthrone, anthanthrone, dioxazine, triarylcarbonium, quinophthalone) pigments, and mixtures of any of the foregoing. In one embodiment of the present invention, the organic material is selected from perylenes, quinacridones, phthalocyanines, isoindolines, dioxazines (that is, triphenedioxazines), 1,4-diketopyrrolopyrroles, anthrapyrimidines, anthanthrones, flavanthrones, indanthrones, perinones, pyranthrones, thioindigos, 4,4'-diamino-1,1'-dianthraquinonyl, as well as substituted derivatives thereof, and mixtures thereof.

Perylene pigments used in the practice of the present invention may be unsubstituted or substituted. Substituted perylenes may be substituted at imide nitrogen atoms for example, and substituents may include an alkyl group of 1 to 10 carbon atoms, an alkoxy group of 1 to 10 carbon atoms and a halogen (such as chlorine) or combinations thereof. Substituted perylenes may contain more than one of any one substituent. The diimides and dianhydrides of perylene-3,4,9,10-tetracarboxylic acid are preferred. Crude perylenes can be prepared by methods known in the art. Please review, W. Herbst and K. Hunger, Industrial Organic Pigments (New York: VCH Publishers, Inc., 1993), pages 9 and 467-475, H. Zollinger, Color Chemistry (VCH Verlagsgessellschaft, 1991), pages 227-228 and 297-298, and M. A. Perkins, "Pyridines and Pyridones" in The Chemistry of Synthetic Dyes and Pigments, ed. H. A. Lubs (Malabar, Fla.: Robert E. Krieger Publishing Company, 1955), pages 481-482.

Phthalocyanine pigments, especially metal phthalocyanines may be used in the practice of the present invention. Although copper phthalocyanines are more readily available, other metal-containing phthalocyanine pigments, such as those based on zinc, cobalt, iron, nickel, and other such metals, may also be used. Metal-free phthalocyanines are also suitable. Phthalocyanine pigments may be unsubstituted or partially substituted, for example, with one or more alkyl (having 1 to 10 carbon atoms), alkoxy (having 1 to 10 carbon atoms), halogens such as chlorine, or other substituents typical of phthalocyanine pigments. Phthalocyanines may be prepared by any of several methods known in the art. They are typically prepared by a reaction of phthalic anhydride, phthalonitrile, or derivatives thereof, with a metal donor, a nitrogen donor (such as urea or the phthalonitrile itself), and an optional catalyst, preferably in an organic solvent. See , for example, W. Herbst and K. Hunger, Industrial Organic Pigments (New York: VCH Publishers, Inc., 1993), pages 418-427, H. Zollinger, Color Chemistry (VCH Verlagsgessellschaft, 1991), pages 101-104, and N. M. Bigelow and M. A. Perkins, "Phthalocyanine Pigments" in The Chemistry of Synthetic Dyes and Pigments, ed. H. A. Lubs (Malabar, Fla.: Robert E. Krieger Publishing Company, 1955), pages 584- 587; see also U.S. Pat. Nos. 4,158,572, 4,257,951, and 5,175,282 and British Patent 1,502,884.

Quinacridone pigments, as used herein, include unsubstituted or substituted quinacridones (for example, with one or more alkyl, alkoxy, halogens such as chlorine, or other substituents typical of quinacridone pigments), and are suitable for the practice of the present invention. The quinacridone pigments may be prepared by any of several methods known in the art but are preferably prepared by thermally ring-closing various 2,5-dianilinoterephthalic acid precursors in the presence of polyphosphoric acid. E.g., S. S. Labana and L. L. Labana, "Quinacridones" in Chemical Review, 67, 1-18 (1967), and U.S. Pat. Nos. 3,157,659, 3, 256,285, 3,257,405, and 3,317,539.

Isoindoline pigments, which can optionally be substituted symmetrically or unsymmetrically, are also suitable for the practice of the present invention can be prepared by methods known in the art. E.g., W. Herbst and K. Hunger, Industrial Organic Pigments (New York: VCH Publishers, Inc., 1993), pages 398-415. A particularly preferred isoindoline pigment, Pigment Yellow 139, is a symmetrical adduct of iminoisoindoline and barbituric acid precursors. Dioxazine pigments (that is, triphenedioxazines) are also suitable organic pigments and can be prepared by methods known in the art. See for example, W. Herbst and K. Hunger, Industrial Organic Pigments (New York: VCH Publishers, Inc., 1993), pages 534-537.

Mixtures of any of the previously described inorganic nanoparticulates and/or organic nanoparticulates can also be used.

The nanoparticlates useful in any of the aqueous dispersions of the present invention can comprise color-imparting nanoparticulates. By the term "color-imparting nanoparticlulates" is meant a nanoparticulate that significantly absorbs some wavelengths of visible light, that is, wavelengths ranging from 400 to 700 nm, more than it absorbs other wavelengths in the visible region.

The exact choice of nanoparticulates will depend upon the specific application and color performance requirements of any compositions which comprise the aqueous dispersions of the present invention.

The nanoparticulates can be formed by any of a number of various methods known in the art. In one embodiment, the nanoparticulates can be prepared by pulverizing and classifying the dry particulate material. For example, bulk pigments such as any of the inorganic or organic pigments discussed above, can be milled with milling media having a particle size of less than 0.5 millimeters (mm), or less than 0.3 mm, or less than 0.1 mm. The pigment particles typically are milled to nanoparticulate sizes in a high energy mill in one or more solvents (either water, organic solvent, or a mixture of the two), optionally in the presence of a polymeric grind vehicle. If necessary, a dispersant can be included, for example, (if in organic solvent) SOLSPERSE® 32000 or 32500 available from Lubrizol Corporation, or (if in water) SOLSPERSE® 27000, also available from Lubrizol Corporation. Other suitable methods for producing the nanoparticulates include crystallization, precipitation, gas phase condensation, and chemical attrition (i.e., partial dissolution). It should be noted that any known method for producing the nanoparticulates can be employed, provided that reagglomeration of the nanoparticulates is minimized or avoided altogether.

The nanoparticulates can be present in the aqueous dispersion of the present invention in an amount of at least 0.1 weight percent, or in an amount of at least 1 weight percent, or in an amount of at least 15 weight percent, or in an amount of at least 10 weight percent based on weight of total solids present in the dispersion. Also, the nanoparticulates can be present in the aqueous dispersion of the present invention in an amount of up to 60 weight pecent, or up to 50 weight percent, or in an amount of up to 40 weight percent, or in an amount of up to 35 weight percent, based on weight of total solids present in the dispersion. The amount of the nanoparticulates present in the aqueous dispersion of the present invention can range between any combination of the recited values, inclusive of the recited values.

As previously mentioned, in accordance with an embodiment of the present invention, the aqueous dispersion is prepared by admixing, optionally in the presence of an aqueous medium, the nanoparticulates with a mixture of one or more polymerizable unsaturated monomers with one or more polymers as defined above to form an admixture. The admixture then is subjected to high stress shear conditions (described in detail below) in the presence of an aqueous medium to particularize the admixture into microparticles. The ethylenically unsaturated monomers is then polymerized under free radical conditions as described below.

The aqueous medium used in any of the methods of the present invention generally is exclusively water. However, for some monomer and/or polymer systems, it can be desirable to also include a minor amount of inert organic solvent for example to assist in lowering the viscosity of the polymer to be dispersed. Typically, the amount of organic solvent present in the aqueous dispersion of the present invention can be less than 20 weight percent, or can be less than 10 weight percent, or can be less than 5 weight percent, and can be less than 2 weight percent based on total weight of the dispersion. For example, if the organic phase has a Brookfield viscosity greater than 1000 centipoise at 25°C or a W Gardner Holdt viscosity, some solvents can be used. Examples of suitable organic solvents which can be incorporated for this purpose include, but are not limited to propylene glycol monobutyl ether, ethylene glycol monohexyl ether, ethylene glycol monobutyl ether, n-butanol, benzyl alcohol, and mineral spirits.

When included the polymerizable, ethylenically unsaturated monomers can include any of the polymerizable ethylenically, unsaturated monomers, including vinyl monomers known in the art. Non-limiting examples of useful ethylenically unsaturated carboxylic acid functional group-containing monomers include (meth)acrylic acid, beta-carboxyethyl acrylate, acryloxypropionic acid, crotonic acid, fumaric acid, monoalkyl esters of fumaric acid, maleic acid, monoalkyl esters of maleic acid, itaconic acid, monoalkyl esters of itaconic acid and mixtures thereof. As used herein, "(meth)acrylic" and terms derived therefrom are intended to include both acrylic and methacrylic.

Non-limiting examples of other useful ethylenically unsaturated monomers free of carboxylic acid functional groups include alkyl esters of (meth)acrylic acids, for example, ethyl (meth)acrylate, methyl (meth)acrylate, butyl (meth)acrylate, 2-ethylhexyl (meth)acrylate, 2-hydroxyethyl (meth)acrylate, hydroxypropyl (meth)acrylate, hydroxy butyl (meth)acrylate, isobornyl (meth)acrylate, lauryl (meth)acrylate, and ethylene glycol di(meth)acrylate; vinyl aromatics such as styrene and vinyl toluene; (meth)acrylamides such as N-butoxymethyl acrylamide; acrylonitriles; dialkyl esters of maleic and fumaric acids; vinyl and vinylidene halides; vinyl acetate; vinyl ethers; allyl ethers; allyl alcohols; derivatives thereof and mixtures thereof.

The ethylenically unsaturated monomers also can include ethylenically unsaturated, beta-hydroxy ester functional monomers, such as those derived from the reaction of an ethylenically unsaturated acid functional monomer, such as a monocarboxylic acid, for example, acrylic acid, and an epoxy compound which does not participate in the free radical initiated polymerization with the unsaturated acid monomer. Examples of such epoxy compounds are glycidyl ethers and esters. Suitable glycidyl ethers include glycidyl ethers of alcohols and phenols such as butyl glycidyl ether, octyl glycidyl ether, phenyl glycidyl ether and the like. Preferred epoxy compounds include those having the following structure (I):

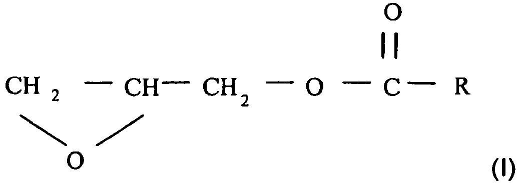

where R is a hydrocarbon radical containing from 4 to 26 carbon atoms. Suitable glycidyl esters include those which are commercially available from Shell Chemical Company under the tradename CARDURA E and from Exxon Chemical Company under the tradename GLYDEXX-10. Alternatively, the beta-hydroxy ester functional monomers can be prepared from an ethylenically unsaturated, epoxy functional monomer, for example glycidyl (meth)acrylate and allyl glycidyl ether, and a saturated carboxylic acid, such as a saturated monocarboxylic acid, for example isostearic acid.

As previously mentioned, the nanoparticulates are additionally admixed with one or more polymers. In one embodiment of the present invention, the polymer can comprise one or more polymers selected from acrylic polymers, polyurethane polymers, polyester polymers, polyether polymers, silicon-based polymers, co-polymers thereof, and mixtures thereof.

Suitable acrylic polymers can include copolymers of any of the ethylenically unsaturated and/or vinyl monomers discussed above. For example, the acrylic polymer can be a copolymer of acrylic acid or methacrylic acid, or hydroxyalkyl esters of acrylic or methacrylic acid, such as hydroxyethyl methacrylate or hydroxypropyl acrylate, with one or more other polymerizable ethylenically unsaturated monomers such as alkyl esters of acrylic acid including methyl methacrylate and 2-ethyl hexyl acrylate, and vinyl aromatic compounds such as styrene, alpha-methyl styrene and vinyl toluene.

Suitable methods for homo- and co-polymerizing ethylenically unsaturated monomers and/or other addition polymerizable monomers and preformed polymers are well known to those skilled in the art of polymer synthesis and further discussion thereof is not believed to be necessary in view of the present disclosure. For example, polymerization of the ethylenically unsaturated monomers can be carried out in bulk, in aqueous or organic solvent solution such as benzene or n-hexane, in emulsion, or in aqueous dispersion. Kirk-Othmer Encyclopedia of Chemical Technology, Vol. 1 (1963) at page 305. The polymerization can be effected by means of a suitable initiator system, including free radical initiators such as benzoyl peroxide or azobisisobutyronitrile, anionic initiation and organometallic initiation. Molecular weight can be controlled by choice of solvent or polymerization medium, concentration of initiator or monomer, temperature, and the use of chain transfer agents. If additional information is needed, such polymerization methods are disclosed in Kirk-Othmer, Vol. 1 at pages 203-205, 259-297 and 305-307.

Besides acrylic polymers, polymers suitable for use in the aqueous dispersion of the present invention can also include a polyester polymer or oligomer. Such polymers may be prepared in a known manner by condensation of polyhydric alcohols and polycarboxylic acids. Suitable polyhydric alcohols include ethylene glycol, neopentyl glycol, trimethylolpropane and pentaerythritol. Suitable polycarboxylic acids can include adipic acid, 1,4-cyclohexyl dicarboxylic acid and hexahydrophthalic acid. Besides the polycarboxylic acids mentioned above, functional equivalents of the acids such as anhydrides where they exist or lower alkyl esters of the acids such as the methyl esters may be used. Also, small amounts of monocarboxylic acids such as stearic acid may be used. For example, hydroxyl-containing polyester oligomers can be prepared by reacting an anhydride of a dicarboxylic acid such as hexahydrophthalic anhydride with a diol such as neopentyl glycol in a 1:2 molar ratio. Suitable polyester polymers may be prepared in such a way to contain free terminal hydroxyl and/or carboxyl groups if desired.

If desired, suitable drying oil fatty acids may be used and include those derived from linseed oil, soya bean oil, tall oil, dehydrated castor oil or tung oil.

Polyurethane polymers are also suitable, such as any polyurethane polymers known in the art. In one embodiment the polyurethane polymer contains terminal isocyanate or hydroxyl groups. Such polyurethane polyols or NCO-terminated polyurethanes are those prepared by reacting polyols including polymeric polyols with polyisocyanates. Polyurea-containing terminal isocyanate or primary or secondary amine groups which can be used are those prepared by reacting polyamines including polymeric polyamines with polyisocyanates. The hydroxyl/isocyanate or amine/isocyanate equivalent ratio is adjusted and reaction conditions selected to obtain the desired terminal group. Examples of suitable polyisocyanates are those described in U.S. Pat. No. 4,046,729 at column 5, line 26 to column 6, line 28. Examples of suitable polyols are those described in U.S. Pat. No. 4,046,729 at column 7, line 52 to column 10, line 35. Examples of suitable polyamines are those described in U.S. Pat. No. 4,046,729 at column 6, line 61 to column 7, line 32 and in U.S. Pat. No. 3,799,854 at column 3, lines 13 to 50.

Other useful polymers can include polyamides, such as acrylamide, methacrylamide, N-alkylacrylamides and N-alkylmethacrylamides.

Polyethers can also be used to prepare the aqueous dispersion of the present invention. Examples of suitable polyether polymers can include, for example polyether polyols such as polyalkylene ether polyols having the following structural formulas (II) or (III): 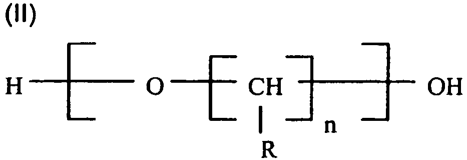 or

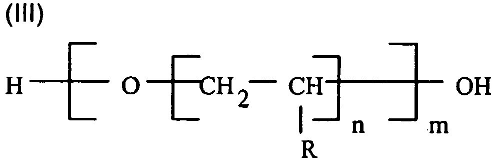

wherein the substituent R is hydrogen or a lower alkyl group containing from 1 to 5 carbon atoms including mixed substituents, and n has a value typically ranging from 2 to 6 and m has a value ranging from 8 to 100 or higher. Exemplary polyalkylene ether polyols include poly(oxytetramethylene) glycols, poly(oxytetraethylene) glycols, poly(oxy-1,2-propylene) glycols, and poly(oxy-1,2-butylene) glycols.

Also useful are polyether polyols formed from oxyalkylation of various polyols, for example, glycols such as ethylene glycol, 1,6-hexanediol, Bisphenol A, and the like, or other higher polyols such as trimethylolpropane, pentaerythritol, and the like. Polyols of higher functionality which can be utilized as indicated can be made, for instance, by oxyalkylation of compounds such as sucrose or sorbitol. One commonly utilized oxyalkylation method is reaction of a polyol with an alkylene oxide, for example, propylene or ethylene oxide, in the presence of an acidic or basic catalyst. Specific examples of polyethers include those sold under the names TERATHANE and TERACOL, available from E. I. Du Pont de Nemours and Company, Inc.

As previously mentioned, the polymers useful in the preparation of the aqueous dispersion of the present invention can include a silicon-based polymer. As used herein, by "silicon-based polymers" is meant a polymer comprising one or more -SiO- units in the backbone. Such silicon-based polymers can include hybrid polymers, such as those comprising organic polymeric blocks with one or more -SiO- units in the backbone.

The polymers which are useful in the preparation of the aqueous dispersion of the present invention have a weight average molecular weight (Mw) ranging from 1000 to 20,000, or 1500 to 15,000, or 2000 to 12,000 as determined by gel permeation chromatography using a polystyrene standard. The polymers suitable for use in the preparation of the aqueous dispersions of the present invention can be either thermosettable or thermoplastic.

The polymers useful in the preparation of the aqueous dispersion of microparticles of the present invention can also include one or materials typically referred to as crosslinking agents. Such materials can include blocked polyisocyanates, which are useful for crosslinking hydroxyl and/or amine functional group-containing materials, and or aminoplast resins.

The polyisocyanates, if used, usually are reversibly "blocked" polyisocyanates. Examples of suitable polyisocyanates which can be utilized herein include reversibly blocked (cyclo)aliphatic polysiocyanates containing biuret and/or isocyanurate groups, which may optionally also contain allophanate groups. Specific examples of such polyisocyanates include 1,6-hexamethylene diisocyanate , 1-isocyanato-3,3,5-trimethyl-5-isocyanatomethylcyclohexane (i.e., isophorone diisocyanate), 2,4-and/or 2,6-diisocyanato-1-methylcyclohexane (hydrogenated toluene diisocyanate) and 4,4'-diisocyanatodicyclohexylmethane. Such reversibly blocked polyisocyanates are typically prepared by reversibly blocking the above-described polyisocyanates with blocking agents in a manner well known to those skilled in the art.

As used herein, the term "blocked" or "reversibly blocked" is intended to mean that the blocking agents unblock or dissociate at elevated temperatures, that is, temperatures ranging from 40° to 200°C. Examples of suitable blocking agents can include lower aliphatic alcohols such as methanol, oximes such as methyl ethyl ketoxime and lactams such as caprolactam. Other suitable blocking agents include 1,2,4-triazole, dimethyl-1,2,4-triazole, 3,5-dimethylpyrazole and imidazole. Mixtures of the above-mentioned blocking agents can also be used. In a preferred embodiment of the invention, the substantially hydrophobic crosslinking agent (2) comprises the isocyanurate of 1,6-hexamethylene diisocyanate which has been reversibly blocked with 3,5-dimethyl pyrazole.

Aminoplast resins are based on the condensation products of formaldehyde, with an amino- or amido-group carrying substance. Condensation products obtained from the reaction of alcohols and formaldehyde with melamine, urea or benzoguanamine are most common and preferred herein. However, condensation products of other amines and amides can also be employed, for example, aldehyde condensates of triazines, diazines, triazoles, guanadines, guanamines and alkyl- and aryl-substituted derivatives of such compounds, including alkyl- and aryl-substituted ureas and alkyl- and aryl-substituted melamines. Some examples of such compounds are N,N'-dimethyl urea, benzourea, dicyandiamide, formaguanamine, acetoguanamine, glycoluril, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 3,4,6-tris(ethylamino)-1,3,5 triazine, and the like. While the aldehyde employed is most often formaldehyde, other similar condensation products can be made from other aldehydes, such as acetaldehyde, crotonaldehyde, acrolein, benzaldehyde, furfural, glyoxal and the like.

The aminoplast resins usually contain methylol or other alkylol groups, and in most instances at least a portion of these alkylol groups are etherified by a reaction with an alcohol to provide organic solvent-soluble resins. Any monohydric alcohol can be employed for this purpose, including such alcohols as methanol, ethanol, propanol, butanol, pentanol, hexanol, heptanol and others, as well as benzyl alcohol and other aromatic alcohols, cyclic alcohols such as cyclohexanol, monoethers of glycols, and halogen-substituted or other substituted alcohols, such as 3-chloropropanol and butoxyethanol. Commonly employed aminoplast resins are substantially alkylated with methanol or butanol. Suitable aminoplast resins are available, for example, under the tradename CYMEL® from Cytec Industries, Inc.

The nanoparticulates are admixed, optionally in the presence of an aqueous medium, with a mixture of one or more of the polymerizable, ethylenically unsaturated monomers described above, and one or more of the polymers described above. Likewise, if desired, mixtures of the above polyisocyanates and aminoplast resins can be used, as well as mixtures of either one or both of these materials with the one or more polymers and/or the one or more ethylenically unsaturated monomers described above.

In an embodiment of the present invention, the aqueous dispersion of microparticles of the present invention comprises composite microparticles having a first phase comprising the one or more monomers and/or the one or more polymers previously described (and, if used, organic solvent), and a second phase comprising the nanoparticulates. The second phase comprising the nanoparticulates can comprise any of the previously mentioned organic and/or inorganic nanoparticulates.

The one or more monomers and/or one or more polymers can be present in the dispersion in an amount of at least 10 weight percent, or can be present in an amount of at least 20 weight percent, and can be present in an amount of at least 30 weight percent based on total weight of solids present in the dispersion. Also, the one or more monomers and/or one or more polymers can be present in the dispersion in an amount of up to 60 weight percent, and can be present in an amount of up to 70 weight percent, and can be present in an amount of up to 80 weight percent, based on total weight of solids present in the dispersion. The amount of the one or more monomers and/or one or more polymers present in the dispersion can range between any combination of these values inclusive of the recited ranges.

As previously discussed, known methods for preparing composite color-imparting particles conventionally employ emulsion polymerization techniques whereby monomers are polymerized in the presence of a nanosized particles and/or color-imparting particles to form a stable dispersion of composite microparticles. Such monomers can generally comprise relatively high levels of hydrophilic monomers, for example carboxylic acid group-containing monomers, as well as relatively high levels of hydrophilic surfactants or dispersants. The hydrophilic nature of such dispersions, if included in a coating composition, may adversely affect humidity resistance or may impart undesirable water sensitivity. The aqueous dispersion of microparticles comprising nanoparticulates of the present invention can minimize or eliminate altogether the aforementioned negative effects because the binder system (i.e. polymer and surfactant, if any) typically has an acid value of less than or equal to 40 mg KOH/gram binder system, or less than or equal to 30 mg KOH/gram of binder system, or less than or equal to 20 mg KOH/gram of binder system.

In the method for preparing the aqueous dispersion of microparticles of the present invention, after the nanoparticulates are admixed with the one or more polymerizable monomers and/or the one or more polymers as discussed above, the admixture is subjected to high stress shear conditions to particularize the admixture into microparticles. The high stress shear can be accomplished by any of the high stress shear techniques well known in the art.

As used herein, the term "high stress shear conditions" is meant to include not only high stress techniques, such as by the liquid-liquid impingement techniques discussed in detail below, but also high speed shearing by mechanical means. It should be understood that, if desired, any mode of applying stress to the admixture can be utilized so long as sufficient stress is applied to achieve particularization of the admixture into microparticles and the requisite particle size distribution.

The admixture can be subjected to the appropriate stress by use of a MICROFLUIDIZER® emulsifier which is available from Microfluidics Corporation in Newton, Massachusetts. The MICROFLUIDIZER® high-pressure impingement emulsifier is described in detail in U.S. Patent No. 4,533,254. The device consists of a high-pressure (up to about 1.4 x 105 kPa (20,000 psi)) pump and an interaction chamber in which emulsification takes place. The pump forces the admixture, typically in aqueous medium, into the chamber where it is split into at least two streams which pass at very high velocity through at least two slits and collide, resulting in the formation of small particles, i.e., the admixture is "particularized". Generally, the pre-emulsion admixture is passed through the emulsifier at a pressure of between about 3.5 x 104 and about 1 x 105 kPa (5,000 and 15,000 psi). Multiple passes can result in smaller average particle size and a narrower range for the particle size distribution. When using the aforesaid MICROFLUIDIZER® emulsifier, stress is applied by liquid-liquid impingement as has been described. As mentioned above, other modes of applying stress to the pre-emulsification admixture can be utilized so long as sufficient stress is applied to achieve the requisite particle size distribution. For example, one alternative manner of applying stress would be the use of ultrasonic energy.

Stress is described as force per unit area. Although the precise mechanism by which the MICROFLUIDIZER® emulsifier stresses the pre-emulsification admixture to particularize it is not thoroughly understood, it is theorized that stress is exerted in more than one manner. It is believed that one manner in which stress is exerted is by shear, that is, the force is such that one layer or plane moves parallel to an adjacent, parallel plane. Stress can also be exerted from all sides as a bulk, compression stress. In this instance stress could be exerted without any shear. A further manner of producing intense stress is by cavitation. Cavitation occurs when the pressure within a liquid is reduced enough to cause vaporization. The formation and collapse of the vapor bubbles occurs violently over a short time period and produces intense stress. Although not intending to be bound by any particular theory, it is believed that both shear and cavitation contribute to producing the stress which particulates the pre-emulsification mixture.

As discussed above, in various embodiments of the present invention, the nanoparticulates are admixed with one or more polymerizable, ethylenically unsaturated monomers and one or more polymers. The polymerizable ethylenically unsaturated monomers and polymers are blended with the nanoparticulates, optionally in the presence of an aqueous medium, to form a pre-emulsion admixture. The pre-emulsion admixture is then subjected to high stress conditions in the presence of an aqueous medium as described above to particularize the admixture thereby forming microparticles dispersed in the aqueous medium. The polymerizable species within each particle, are subsequently polymerized (i.e. the polymer is formed *in situ,* under suitable free-radical polymerization conditions as described below) under conditions sufficient to produce composite microparticles (each having a first organic or polymeric phase, and a second nanoparticulate phase) which are stably dispersed in the aqueous medium.

In some cases, a surfactant or dispersant can be present to stabilize the dispersion. The surfactant usually is present when the organic component referred to above is mixed into the aqueous medium prior to particularization into microparticles. Alternatively, the surfactant can be introduced into the medium at a point just after the microparticles have been formed.

Anionic, cationic and nonionic surfactants are suitable for use in preparation of the aqueous dispersions of the present invention. In an embodiment of the present invention, the surfactant comprises an anionic surfactant. Other materials well known to those skilled in the art are also suitable for use herein. Generally, both ionic and non-ionic surfactants are used together and the amount of surfactant can range from 1 percent to 10 percent, typically less than 2 percent based on total solids present in the aqueous dispersion.

It should be understood that for purposes of the present invention, the amount of surfactant necessary to produce a stable dispersion of microparticles often can be minimized by the use of other ingredients that facilitate stability of the dispersion. For example, a polymer containing acid functionality that can be neutralized with an amine to form a water-dispersible polymer can be used to disperse other ingredients including the nanoparticulates.

In order to conduct the polymerization of the ethylenically unsaturated monomers in the presence of the nanoparticulates (and the polymer when used), a free radical initiator typically is present. Both water-soluble and oil soluble initiators can be used. Examples of water-soluble initiators include ammonium peroxydisulfate, potassium peroxydisulfate and hydrogen peroxide. Examples of oil soluble initiators include t-butyl hydroperoxide, dilauryl peroxide and 2,2'-azobis(isobutyronitrile). Generally, the reaction is carried out at a temperature ranging from 20° to 80° C. The polymerization can be carried out in either a batch or a continuous process. The length of time necessary to carry out the polymerization can range from 10 minutes to 6 hours, provided that the time is sufficient to form a polymer in situ from the one or more ethylenically unsaturated monomers.

Once the microparticles have been formed and the polymerization process, if any, is complete, the resultant product is a stable dispersion of microparticles in an aqueous medium which can contain some organic solvent. Some or all of the organic solvent can be removed via reduced pressure distillation at a temperature, for example, of less than 40°C. As used herein, with references to any of the aqueous dispersions of microparticles of the present invention, by "stable dispersion" or "stably dispersed" is meant that the microparticles neither settle nor coagulate nor flocculate from the aqueous medium upon standing.

As was stated above, an aspect of any the microparticle dispersions of nanoparticulates of the present invention as described above or below is that the particle size is uniformly small. Generally, it is desirable that the dispersion of microparticles has a mean particle size of less than 300 nanometers and a maximum particle size of less than 500 nanometers. Larger sizes are possible if the dispersion contains additional stabilizing material, such as a protective colloid, or if the viscosity of the dispersion is increased. Obviously, dispersions of microparticles containing dense nanoparticulates have a greater tendency to settle than dispersions of microparticles of the same size but lower density and, thus may require additional stabilizing material.

In the methods of the present invention, the dispersed nanoparticulates typically have a maximum haze of 10%, or, in some embodiments, a maximum haze of 5%, or, in some embodiments, a maximum haze of 1%, or, in other embodiments, a maximum haze of 0.5%. As used herein, "haze" refers to a measurement of the transparency of a material as determined by ASTM D1003.

The haze values for the nanoparticles described herein are determined by first having the nanoparticles dispersed in a liquid (such as water, organic solvent, and/or a dispersant, as described herein) and then measuring these dispersions diluted in a solvent, for example, butyl acetate, using a Byk-Gardner TCS (The Color Sphere) instrument having a 500 micron cell path length. Because the % haze of a liquid sample is concentration dependent, the % haze as used herein is reported at a transmittance of about 15% to about 20% at the wavelength of maximum absorbance. An acceptable haze may be achieved for relatively large particles when the difference in refractive index between the particles and the surrounding medium is low. Conversely, for smaller particles, greater refractive index differences between the particle and the surrounding medium may provide an acceptable haze.

Generally, to achieve the desired haze (minimal scattering) of no more than 10%, the nanoparticles typically have an average primary particle size of no more than 300 nm, or no more than 200 nm, or no more than 150 nm. Therefore, in certain embodiments, the nanoparticles used in the methods of the present invention have such a primary particle size.

In one embodiment, the present invention is directed to an aqueous dispersion of microparticles comprising nanoparticulates prepared by any of the above-described methods, or any of the alternative methods described herein below.

In a further embodiment, the present invention is directed to a coating composition comprising an aqueous dispersion of microparticles comprising nanoparticulates, where the aqueous dispersion of microparticles is prepared by any of the above-described methods or any of the alternative methods described herein below.

Such coating compositions can be thermoplastic compositions or thermosetting (i.e.) curable compositions. As used herein in the specification and the claims" by "thermosetting material" or "thermosetting composition" is meant one which "sets" irreversibly upon curing or crosslinking, wherein the polymer chains of the polymeric components are joined together by covalent bonds. This property is usually associated with a cross-linking reaction of the composition constituents often induced, for example, by heat or radiation. Hawley, Gessner G., The Condensed Chemical Dictionary, Ninth Edition., page 856; Surface Coatings, vol. 2, Oil and Colour Chemists' Association, Australia, TAFE Educational Books (1974). Once cured or crosslinked, a thermosetting material or composition will not melt upon the application of heat and is insoluble in solvents. By contrast, a "thermoplastic material" or "thermoplastic composition" comprises polymeric components which are not joined by covalent bonds and thereby can undergo liquid flow upon heating and are soluble in solvents. Saunders, K.J., Organic Polymer Chemistry, pp. 41-42, Chapman and Hall, London (1973).

It should be understood that any of the aqueous dispersions of microparticles comprising nanoparticulates of the present invention can represent the primary film-forming component of such coating compositions, or, alternatively the aqueous dispersion can represent only one of the components in the coating composition. For example, in addition to the aqueous dispersion of the present invention, such coating compositions also can include a resinous binder system comprising one or more film-forming polymers which may or may not include reactive functional groups, and/or, if appropriate, a crosslinking agent having functional groups reactive with those of the film-forming polymer. As previously mentioned, the one or more polymers, and/or the one or more polymers formed *in situ* via polymerization of the one or more monomers used in the preparation of the microparticles may contain reactive functional groups. Such polymers having reactive groups are available for reaction with a crosslinking agent, for example, with an aminoplast or polyisocyanate included in the organic phase of the microparticle, or for reaction with any of the crosslinking components, i.e., curing agents (described herein) comprising the coating composition.

These coating compositions can be used in a variety of applications, for example, in automotive coating compositions, automotive refinish compositions, industrial coatings, architectural coatings, electrocoatings, powder coatings, coil coatings, and aerospace coatings.

It should be understood that the amount of the aqueous dispersion of microparticles comprising nanoparticulates present in the coating compositions can vary widely depending upon a variety of factors, e.g., the final color desired, the curing method to be used, desired coating performance properties, etc. For example, the aqueous dispersion of microparticles comprising nanoparticulates can be present in the coating composition in an amount as low as 0.05 weight percent (e.g., when used as a pigment tint paste), and as high as 100 weight percent (e.g., when used as the coating composition itself).

In addition to the aqueous dispersion of microparticles comprising nanoparticulates, the coating composition of the present invention can comprise one or more film-forming polymers. Film-forming polymers suitable for this use in the coating composition can include, for example, any of those polymers discussed above with respect to the aqueous dispersion of microparticles.

In an embodiment of the present invention, the film-forming polymer comprises reactive functional groups and is suitable for use in a curable coating composition. Such polymers typically are used in conjunction with a curing agent, and can include, for example, hydroxyl, epoxy, carbamate, amino or carboxylic acid group-containing acrylic copolymers; hydroxyl or carboxylic acid-containing polyester polymers and oligomers; and isocyanate or hydroxyl-containing polyurethane polymers, or amine or isocyanate-containing polyureas which can enhance cure rate, appearance and other physical properties of the cured coating.

Curing agents suitable for use in the curable coating composition of the present invention can include aminoplast resins and phenoplast resins and mixtures thereof, as curing agents for OH, COOH, amide, and carbamate functional group containing materials. Examples of aminoplast and phenoplast resins suitable as curing agents in the curable compositions of the present invention can include any of those described above or those described in U.S. Pat. No. 3,919,351 at col. 5, line 22 to col. 6, line 25.

Also suitable are polyisocyanates and blocked polyisocyanates (as described above) as curing agents for OH and primary and/or secondary amino group-containing materials. Examples of polyisocyanates and blocked isocyanates suitable for use as curing agents in the curable compositions of the present invention are those described above, or those described in U.S. Pat. No. 4,546,045 at col. 5, lines 16 to 38; and in U.S. Pat. No. 5,468,802 at col. 3, lines 48 to 60.

Anhydrides as curing agents for OH and primary and/or secondary amino group containing materials are well known in the art. Examples of anhydrides suitable for use as curing agents in the curable compositions of the present invention are those described in U.S. Pat. No. 4,798,746 at col. 10, lines 16 to 50; and in U.S. Pat. No. 4,732,790 at col. 3, lines 41 to 57.

Polyepoxides as curing agents for COOH functional group containing materials are well known in the art. Examples of polyepoxides suitable for use as curing agents in the curable compositions of the present invention are those described in U.S. Pat. No. 4,681,811 at col. 5, lines 33 to 58.

Polyacids as curing agents for epoxy functional group containing materials are well known in the art. Examples of polyacids suitable for use as curing agents in the curable compositions of the present invention are those described in U.S. Pat. No. 4,681,811 at col. 6, line 45 to col. 9, line 54.

Polyols, that is, material having an average of two or more hydroxyl groups per molecule, can be used as curing agents for NCO functional group containing materials and anhydrides and esters and are well known in the art. Examples of said polyols are those described in U.S. Pat. No. 4,046,729 at col. 7, line 52 to col. 8, line 9; col. 8, line 29 to col. 9, line 66; and in U.S. Pat. No. 3,919,315 at col. 2, line 64 to col. 3, line 33.

Polyamines can also be used as curing agents for NCO functional group containing materials and for carbonates and unhindered esters and are well known in the art. Examples of polyamines suitable for use as curing agents in the curable compositions of the present invention are those described in U.S. Pat. No. 4,046,729 at col. 6, line 61 to col. 7, line 26.

When desired, appropriate mixtures of curing agents may be used. It should be mentioned that such curable compositions can be formulated as a one-component composition where a curing agent such as an aminoplast resin and/or a blocked isocyanate compound such as those described above is admixed with other composition components. The one-component composition can be storage stable as formulated. Alternatively, compositions can be formulated as a two-component composition where, for example, a polyisocyanate curing agent such as those described above can be added to a pre-formed admixture of the other composition components just prior to application. The pre-formed admixture can comprise curing agents for example, aminoplast resins and/or blocked isocyanate compounds such as those described above.

As previously mentioned, the coating composition of the present invention can be a thermoplastic composition. In such instances, the one or more polymers, and/or the polymer formed in situ from the ethylenically unsaturated monomers used to form the aqueous dispersion of microparticles, may or may not comprise reactive functional groups. Likewise, any additional polymers included in the thermoplastic coating compositions may or may not comprise reactive functional groups.

The coating compositions of the present invention can further comprise one or more pigments (in addition to any of the above-described nanoparticulates present in the aqueous dispersion of microparticles). Nonlimiting examples of suitable metallic pigments include aluminum flake, copper bronze flake, and metal oxide coated mica. Besides the metallic pigments, the coating compositions also can contain nonmetallic color pigments conventionally used in surface coatings such as, for example, inorganic pigments such as titanium dioxide, iron oxide, chromium oxide, lead chromate, and carbon black; and organic pigments such as phthalocyanine blue and phthalocyanine green. Filler pigments such as clay, talc and calcium carbonate also can be included.

The coating composition of the present invention also can comprise optional ingredients such as those well known in the art of formulating surface coatings. Such optional ingredients can comprise, for example, surface active agents, flow control agents, thixotropic agents, fillers, anti-gassing agents, organic co-solvents, catalysts, and other customary auxiliaries. Nonlimlting examples of these materials and suitable amounts are described in U.S. Patent Nos. 4,220,679; 4,403,003; 4,147,769; and 5,071,904.

The coating composition of the present invention may be used to form a single coating, for example, a monocoat, a clear top coating or a base coat in a two-layered system or both; or as one or more layers of a multi-layered system including a clear top coating composition, a colorant layer and/or a base coating composition, and/or a primer layer, including, for example, an electrodeposition primer and/or a primer-surfacer layer.

As would be understood by one skilled in the art, coating film thickness and curing temperatures and conditions will depend upon the type of coating layer to be formed , i.e., a primer coating, a basecoating, a monocoat; as well as the coating composition itself, i.e., whether thermosetting or thermoplastic, whether ambient or thermally curable, and, if thermosetting, the type of curing reaction required.

As discussed above, the present invention also is directed to an alternative method for preparing a stable aqueous dispersion of microparticles comprising nanoparticulates. This alternative method comprises the steps of (a) providing a plurality of nanoparticulates, such as any of the nanoparticles described above or mixtures thereof, (b) admixing in the presence of organic solvent (described below) the nanoparticulates with one or more solventbome, water-dispersible polymers; (c) subjecting the admixture to high stress shear conditions, such as any of the high stress shear methods described above, in the presence of aqueous medium, as described above, to form composite microparticles dispersed in the aqueous medium.

The nanoparticulates have an average particle size of 300 nanometers or less, or 200 nanometers or less, or 150 nanometers or less, or 100 nanometers or less, or 50 nanometers or less. Also the nanoparticulates can have an average particle size of 1 nanometer or greater, or an average particle size of 5 nanometers or greater, or an average particle size of 10 nanometers or greater. The average particle size of the nanoparticulates suitable for use in the present invention may range between any combination of these values inclusive of the recited values.

The composite microparticles have a first phase comprising the one or more solventbome, water-dispersible polymers and, optionally, the organic solvent, and a second phase comprising the nanoparticulates. Such aqueous dispersions likewise are particularly useful as components in coating compositions, particularly In electrodepositable coating compositions.

According to the present invention the nanoparticulates have an average particle size of 300 nanometers or less. Non-limiting examples of suitable organic solvents can include glycol ethers, such as butyl carbitol, propylene glycolmonobutyl ether, ethylene glycol monobutyl; alcohols, such as butanol, a-ethylhexanol, tridecylalcohol,; ketones, such as methyl isobutyl ketone, methylpropyl ketone; esters, such as butyl acetate; aromatic hydrocarbons, such as xylene and toluene; and aliphatic hydrocarbons, such as heptane.

The one or more solventbome, water-dispersible polymers suitable for use in the alternative embodiment described immediately above, are any of a variety of polymers that are dispersible, soluble, or emulsifiable in aqueous medium. Such polymers can comprise any of a variety of hydrophilic groups, e.g., hydroxyl groups, amino groups, carboxylic acid groups, or mixtures of such hydrophilic groups. Such hydrophilic groups can be present in the polymer in an amount sufficient to render the polymer dispersible, soluble, or emulsifiable in aqueous media. The polymers can be rendered dispersible in aqueous media either by virtue of being sufficiently hydrophilic, or by neutralization or solubilization with an acid or base to facilitate dispersion.

In an embodiment of the invention, the one or more polymers (i.e., resins) are those having ionic salt groups or groups capable of forming ionic salt groups, such as by neutralization with acid (in the case of a cationic resin) or with a base (in the case of an anionic resin). Such ionic resins are particularly useful in electrodepositable coating compositions. A wide variety of electrodepositable polymers are known and can be used in the method of the invention so long as the polymers are or can be adapted to be "water dispersible," i.e., adapted to be solubilized, dispersed or emulsified in water. The polymer is or can be adapted to be ionic in nature, that is, the polymer contains or can be adapted to contain anionic functional groups to impart a negative charge or cationic functional groups to impart a positive charge.

In a particular embodiment, the nanoparticulates are admixed with an un-solubilized, yet water dispersible, solventborne resin in the presence of an organic solvent prior to particularization into microparticles in the presence of aqueous medium. Alternatively, the nanoparticulates can be admixed with any of the ionic group-containing film-forming resins (i.e., polymers) described below with respect to the electrodepositable coating compositions.

The present invention also provides an electrodepositable coating composition comprising a resinous phase dispersed in an aqueous medium. The resinous phase comprises (a) an active hydrogen-containing, ionic group-containing electrodepositable resin, (b) a curing agent having functional groups reactive with the active hydrogens of (a); and (c) the stable aqueous dispersion of composite microparticles prepared by any of the methods described above.

Examples of film-forming resins suitable for use in anionic electrodepositable coating compositions are carboxylic acid containing polymers such as the reaction product or adduct of a drying oil or semi-drying fatty acid ester with a dicarboxylic acid or anhydride; and the reaction product of a fatty acid ester, unsaturated acid or anhydride and any additional unsaturated modifying materials which are further reacted with polyol. Also suitable are the at least partially neutralized interpolymers of hydroxy-alkyl esters of unsaturated carboxylic acids, unsaturated carboxylic acid and at least one other ethylenically unsaturated monomer. Still another suitable electrodepositable resin comprises an alkyd-aminoplast vehicle, i.e., a vehicle containing an alkyd resin and an amine-aldehyde resin. Yet another anionic electrodepositable resin composition comprises mixed esters of a resinous polyol. These compositions are described in detail in U.S. Pat. No. 3,749,657 at col. 9, lines 1 to 75 and col. 10, lines 1 to 13. Other acid functional polymers can also be used such as phosphatized polyepoxide or phosphatized acrylic polymers as are well known to those skilled in the art. Such polymers can be base-solubilized to form acid salt groups.

The resin can be cationic and capable of deposition on a cathode. Examples of such cationic resins include those polymers which contain or can be adapted to contain amine salt groups, such as the acid-solubilized reaction products of polyepoxides and primary or secondary amines such as those described in U.S. Pat. Nos. 3,663,389; 3,984,299; 3,947,338; and 3,947,339. Usually, these amine salt group-containing resins are used in combination with a blocked isocyanate curing agent. The isocyanate can be fully blocked as described in the aforementioned U.S. Pat. No. 3,984,299 or the isocyanate can be partially blocked and reacted with the resin backbone such as described in U.S. Pat. No. 3,947,338. Also, one-component compositions as described in U.S. Pat. No. 4,134,866 and DE-OS No. 2,707,405 can be used as the film-forming resin. Besides the epoxy-amine reaction products, film-forming resins can also be selected from cationic acrylic resins such as those described in U.S. Pat. Nos. 3,455,806 and 3,928,157.

Besides these amine salt group-containing resins, quaternary ammonium salt group-containing resins can also be employed. Examples of these resins are those which are formed from reacting an organic polyepoxide with a tertiary amine salt. Such resins are described in U.S. Pat. Nos. 3,962,165; 3,975,346; and 4,001,101. Examples of other cationic resins are ternary sulfonium salt group-containing resins and quaternary phosphonium salt-group containing resins such as those described in U.S. Pat. Nos. 3,793,278 and 3,984,922, respectively. Also, film-forming resins which cure via transesterification such can be used. Further, cationic resins prepared from Mannich bases such as described in U.S. Pat. No. 4,134,932 can be used.

The resins to which the present invention is particularly effective are those positively charged resins which contain primary and/or secondary amine groups. Such resins are described in U.S. Pat. Nos. 3,663,389; 3,947,339; and 4,116,900. In U.S. Pat. No. 3,947,339, a polyketimine derivative of a polyamine such as diethylenetriamine or triethylenetetraamine is reacted with a polyepoxide. When the reaction product is neutralized with acid and dispersed in water, free primary amine groups are generated. Also, equivalent products are formed when polyepoxide is reacted with excess polyamines such as diethylenetriamine and triethylenetetraamine and the excess polyamine vacuum stripped from the reaction mixture. Such products are described in U.S. Pat. Nos. 3,663,389 and 4,116,900.

The resinous phase of the electrodepositable composition further comprises (b) a curing agent adapted to react with the active hydrogen groups of the ionic electrodepositable resin (a) described immediately above. Both blocked polyisocyanate and aminoplast curing agents such as any of those described above, are suitable for this purpose.

The polyisocyanates can be fully blocked as described in U. S. Patent No. 3,984,299 column 1 lines 1 to 68, column 2 and column 3 lines 1 to 15, or partially blocked and reacted with the polymer backbone as described in U. S. Patent No. 3,947,338 column 2 lines 65 to 68, column 3 and column 4 lines 1 to 30.

Such electrodepositable coating compositions can be applied to any of a variety of electroconductive substrates by any of the electrodeposition methods well known in the art.

The methods for preparing the aqueous dispersions of microparticles comprising nanoparticulates of the present invention provide stable dispersions of microparticles with uniformly small particle size. Such dispersions of microparticles are useful in coating compositions including electrodepositable coating compositions where they can provide enhanced color development, and performance properties such as humidity resistance, scratch resistance, film clarity, etc.

Illustrating the invention are the following examples. All parts and percentages in the examples, as well as throughout the specification, are by weight unless otherwise indicated.

### EXAMPLES

### EXAMPLE A

### Polyurethane Pre-polymer

This example describes the preparation of a polyurethane pre-polymer which was subsequently used to form the respective pigment dispersion of Example I and latexes of Examples 1 and 2. The polyurethane was prepared from a mixture of the following ingredients in the ratios indicated below:

| **Ingredients** | **Equivalents** | **Weight (grams)** |
|---|---|---|
| **Charge I** | | |
| N-methyl pyrrolidinone | | 671.0 |
| Dimethylolpropionic acid (DMPA) | 9.0 | 603.6 |
| Triphenyl phosphite | | 6.0 |
| Dibutyltin dilaurate | | 6.0 |

| **Charge II** | | |
|---|---|---|
| Hydroxyethyl methacrylate (HEMA) | 4.5 | 585.6 |
| Butylated hydroxytoluene | | 6.0 |
| Poly (butylene oxide)¹ | 6.0 | 3000.0 |

| **Charge III** | | |
|---|---|---|
| Tetramethylxylene diisocyanate (TMXDI) | 15.0 | 1831.5 |

| **Charge IV** | | |
|---|---|---|
| Butyl acrylate | | 355.0 |

| **Charge V** | | |
|---|---|---|
| Butyl acrylate | | 2645.0 |

| | | |
|---|---|---|
| ¹Poly (butylene oxide) had a number average molecular weight of 1000. | | |

The polyurethane pre-polymer was prepared in a four-neck round bottom flask equipped with an electronic temperature probe, mechanical stirrer, condenser, and a heating mantle. Charge I was stirred in the flask at a temperature of 100°C until all solids were dissolved. Charge II was added and the mixture was reheated to 100°C. Charge III was added over a 3 hour period. Charge IV was used to rinse the addition funnel containing the TMXDI and the temperature of the mixture was then held at 100°C for an additional 90 minutes. Charge V was added to produce a 60% solution with a Gardner-Holdt viscosity of T+ and an acid value of 25.8.

### EXAMPLE B

### Polyester Pre-polymer

This example describes the preparation of a polyester pre-polymer which was subsequently used to form the respective latexes of Examples 1 and 2. The polyester was prepared from a mixture of the following ingredients in the ratios indicated below:

| **Ingredients** | **Equivalents** | **Weight (grams)** |
|---|---|---|
| **Charge I** | | |
| 1,6-hexanediol | 64.30 | 3800.0 |
| Maleic anhydride | 14.68 | 720.0 |
| Adipic acid | 9.86 | 720.0 |
| Isophthalic acid | 23.60 | 1960.0 |
| Dibutyltin oxide | | 7.2 |
| Triphenyl phosphite | | 14.4 |

| **Charge II** | | |
|---|---|---|
| Butyl acrylate | | 1084.0 |
| Hydroxypropyl methacrylate | | 542.0 |
| IONOL | | 14.4 |

| | | |
|---|---|---|
| ¹ butylated hydroxytoluene, commercially available from Shell Chemical Co. | | |

The polyester pre-polymer was prepared in a four-neck round bottom flask equipped with an electronic temperature probe, mechanical stirrer, condenser, dry nitrogen sparge, and a heating mantle. Charge I was stirred in the flask at 220°C until 712 ml of distillate was collected and the acid value dropped to 4.8 KOH/gram. The material was cooled to 85°C and Charge II was stirred in. The final product was a pale yellow liquid with a Gardner-Holdt viscosity of U+, an acid value of 3.8 KOH/gram, a number average molecular weight (M_{N}) of 1516, a weight average molecular weight (M_{W}) of 2767, and a nonvolatile content of 77.6% as measured at 110°C for one hour.

### EXAMPLE C

### Polyurethane / urea Pre-polymer

This example describes the preparation of a polyurethane / urea which was subsequently used to form the respective latexes of Examples 3 and 5. The polyurethane / urea was prepared from a mixture of the following ingredients in the ratios indicated below:

| **Ingredients** | **Equivalents** | **Weight (grams)** |
|---|---|---|
| **Charge I** | | |
| N-methyl pyrrolidinone | | 232.7 |
| Hydroxyethyl methacrylate | 1.0 | 130.1 |
| Dimethylpropionic acid | 4.0 | 268.3 |
| Triphenyl phosphite | | 2.6 |
| Dibutyltin dilaurate | | 2.6 |
| Butylated hydroxytoluene | | 2.6 |

| **Charge II** | | |
|---|---|---|
| Poly (butylene oxide)¹ | 2.0 | 1000.0 |

| **Charge III** | | |
|---|---|---|
| 4,4'-methylenebis(cyclohexyl isocyanate) | 8.0 | 1048.0 |

| **Charge IV** | | |
|---|---|---|
| Butyl acrylate | | 200.0 |

| **Charge V** | | |
|---|---|---|
| Diethanolamine | 1.0 | 105.1 |

| **Charge VI** | | |
|---|---|---|
| Methyl methacrylate | | 930.6 |
| Butyl acrylate | | 730.6 |

| | | |
|---|---|---|
| ¹Poly (butylene oxide) had a number average molecular weight of 1000. | | |

The polyurethane / urea was prepared in a four-neck round bottom flask equipped with an electronic temperature probe, mechanical stirrer, condenser, and a heating mantle. Charge I was stirred in the flask at a temperature of 100°C until all solids were dissolved. Charge II was added and the mixture was cooled to 80°C. Charge III was added over a 15 minute period. Charge IV was used to rinse the addition funnel containing the isocyanate, and the temperature of the mixture was then held at 90°C for an additional 3 hours. Charge V was added over a ten minute period followed by the addition of charge VI. The final solution had a Gardner-Holdt viscosity of Z5+, an acid value of 23.6, and a nonvolatile content of 56.3% as measured at 110°C for one hour.

### EXAMPLE D

### Acrylic Dispersant

This example describes the preparation of an acrylic dispersant which was subsequently used to form the respective pigment dispersion of Example J. The acrylic dispersant was prepared from a mixture of the following ingredients in the ratios indicated below:

| **Ingredients** | **Weight (grams)** |
|---|---|
| **Charge I** | |
| Maqnesol | 20.0 |
| Toluene | 120.0 |

| **Charge II** | |
|---|---|
| 2,2'-dipyridyl | 7.5 |
| Copper (0) powder | 6.1 |

| **Charge III** | |
|---|---|
| Para-toluenesulfonyl chloride | 30.4 |

| **Charge IV** | |
|---|---|
| Benzylmethacrylate | 169.2 |
| Glycidyl isopropyl ether | 20.0 |

| **Charge V** | |
|---|---|
| MPEG (550) MA | 888.3 |
| Toluene | 250.0 |

Charge I was mixed in a 2 liter flask with air-stirrer, thermocouple and azeotropic distillation set-up. Charge I was heated to reflux and water was azeotroped off. Charge I was then cooled and put under a nitrogen blanket. Charges II and III were added in order while maintaining a nitrogen blanket. Charge IV was added to an addition funnel and sparged with nitrogen for 15 minutes prior to addition. Charge IV was added to the reaction flask and the mixture was heated carefully to 70 °C. When the solids reached 60.7%, Charge V was charged to an addition funnel and sparged with nitrogen for 15 minutes. Charge V was added to the reaction over 30 minutes while maintaining a 70 °C reaction temperature. The reaction was heated for 6 hours and then cooled and stirred overnight under a nitrogen blanket. The reaction mixture was thinned with 500 g of toluene and then filtered through a cake of magnesol to remove the residual catalyst. Solvent was removed under vacuum yielding a resin at 98.4% solids. The number average molecular weight (man) was 7469. The weight average molecular weight (M_{w}) was 9212. M_{w}/Mₙ was 1.2.

### EXAMPLE E

### Polyurethane / urea Dispersant

This example describes the preparation of a polyurethane / urea dispersant which was subsequently used to the form the latex of Example 6. The polyurethane / urea dispersant was prepared from a mixture of the following ingredients in the ratios indicated below:

| **Ingredients** | **Equivalents** | **Weight (grams)** |
|---|---|---|
| **Charge I** | | |
| N-methyl pyrrolidinone | | 160.6 |
| Hydroxyethyl methacrylate (HEMA) | 0.50 | 65.1 |
| Dimethylolpropionic acid (DMPA) | 2.50 | 167.7 |
| Triphenyl phosphite | | 1.6 |
| Dibutyltin dilaurate | | 1.6 |
| Butylated hydroxytoluene | | 1.6 |

| **Charge II** | | |
|---|---|---|
| Poly (butylene oxide)¹ | 2.0 | 500.0 |

| **Charge III** | | |
|---|---|---|
| Methylene bis(4-cyclohexylisocyanate) | 12.0 | 786.0 |

| **Charge IV** | | |
|---|---|---|
| Deionized water | | 2107.4 |
| Dimethylethanolamine | 1.00 | 52.6 |
| Propylene glycol monobutyl ether | | 160.6 |
| Ethylenediamine | 2.0 | 30.1 |

| | | |
|---|---|---|
| ¹Poly (butylene oxide) had a number average molecular weight of 1000. | | |

Charge I was stirred in the flask at a temperature of 100°C until all solids were dissolved. Charge II was added and the mixture was reheated to 50°C. Charge III was added over a 15 minute period and the resulting mixture was held at 90°C for 3 hours. Charge IV was stirred in a separate flask and heated to 60°C. The reaction product of Charges I, II, and III was added to Charge IV and the resulting mixture was cooled to room temperature. The final product was a white emulsion with an acid value of 16.3, a Brookfield viscosity of 763 poise (spindle #5 at 12 rpm), a pH of 7.3, and a nonvolatile content of 38.8% as measured at 110°C for one hour.

### EXAMPLE E1

### Polyurethane / urea Dispersant

This example describes the preparation of a polyurethane / urea dispersant which was subsequently used to the form the respective aqueous dispersion of microparticles of Examples 7 and 8. The polyurethane / urea dispersant was prepared from a mixture of the following ingredients in the ratios indicated below:

| **Ingredients** | **Equivalents** | **Weight (grams)** |
|---|---|---|
| **Charge I** | | |
| N-methyl pyrrolidinone | | 269.8 |
| Hydroxyethyl methacrylate (HEMA) | 0.70 | 91.1 |
| Dimethylolpropionic acid (DMPA) | 3.50 | 234.7 |
| Triphenyl phosphite | | 2.2 |
| Dibutyltin dilaurate | | 2.2 |
| Butylated hydroxytoluene | | 2.2 |

| **Charge II** | | |
|---|---|---|
| Poly (butylene oxide)¹ | 1.40 | 700.0 |

| **Charge III** | | |
|---|---|---|
| Methylene bis(4-cyclohexylisocyanate) | 8.40 | 1100.4 |

| **Charge IV** | | |
|---|---|---|
| Butyl methacrylate | | 481.8 |

| **Charge V** | | |
|---|---|---|
| Butyl acrylate | | 642.5 |

| **Charge VI** | | |
|---|---|---|
| Deionized water | | 4263.3 |
| Dimethylethanolamine | 1.40 | 124.7 |
| Diethanolamine | 0.70 | 73.6 |
| Ethylenediamine | 1.40 | 42.1 |

| | | |
|---|---|---|
| ¹Poly (butylene oxide) having a number average molecular weight of 1000. | | |

Charge I was stirred in the flask at a temperature of 100°C until all solids were dissolved. Charge II was added and the mixture was reheated to 70°C. Charge III was added over a 15 minute period followed by the immediate addition of Charge IV. The resulting mixture was held at 90°C for 3 hours and Charge V was then added. Charge VI was stirred in a separate flask and heated to 70°C. The reaction product of Charges I, II, III, IV and V was added to Charge VI and the resulting mixture was cooled to room temperature. The final product was a white emulsion with an acid value of 12.4, a Brookfield viscosity of 2.9 poise (spindle #2 at 60 rpm), a pH of 7.3, and a nonvolatile content of 29.2% as measured at 110°C for one hour.

### EXAMPLE F

### Nano-Sized Pigment Dispersions

This example describes the preparation of a nano-sized PB15:3 phthalocyanine blue pigment dispersion which was subsequently used to form the dispersion of Example 1. The pigment dispersion was prepared from a mixture of the following ingredients in the ratios indicated below:

| **Ingredients** | **Weight (grams)** | **Solid Weight (grams)** |
|---|---|---|
| SOLSPERSE 27000¹ | 45.0 | 45.0 |
| Deionized water | 205.0 | --- |
| 80% aqueous solution of 2-dimethylamino-2-methyl-1-propanol | 3.0 | --- |
| PB 15:3 pigment² | 80.0 | 80.0 |

| | | |
|---|---|---|
| ¹ SOLSPERSE 27000 hyperdispersant, commercially available from Lubrizol Corp. ² PB 15:3, phthalocyanine blue pigment, commercially available from BASF Corp. | | |

The ingredients listed above were mixed in a water-cooled one liter jacketed stainless steel beaker with an inside diameter of 9.9 cm. The ingredients were mixed using a Premier Mill Laboratory Dispersator Model 2000 equipped with a 3.8 cm cowles blade. 294.8 g of glass beads was used as the milling media for the mixture. The glass beads had a mean diameter of 71 microns and are available from Potters Glass, Inc.

The mixture was milled at 6000 rpm for 25 hours. The progress of the milling was monitored by measuring the visible spectra of samples and observing the decrease in absorbance at a wavelength of 400 nanometers. During the course of the milling, an additional 152.0 g of deionized water was added as needed to offset the increasing viscosity of the mixture. Also added to the mixture was 300.0 g glass beads, 33.0 g Solsperse 27000, and 0.8 g 2-dimethylamino-2-methyl-1-propanol in addition to the amounts listed in the table above. The mixture was filtered through a 5 micron felt bag to remove the glass beads. The product had a non-volatile content of 38.7% as measured at 110°C for one hour.

### EXAMPLE G

### Nano-sized PY128 yellow pigment dispersion

This example describes the preparation of a nano-sized PY128 yellow pigment dispersion which was subsequently used to form the dispersion of Example 2. The pigment dispersion was prepared from a mixture of the following ingredients in the ratios indicated below:

| **Ingredients** | **Weight (grams)** | **Solid Weight (grams)** |
|---|---|---|
| SOLSPERSE 27000 | 80.0 | 80.0 |
| Deionized water | 290.0 | --- |
| 80% aqueous solution of 2-dimethylamino-2-methyl-1-propanol | 3.8 | --- |
| PY128 pigment¹ | 80.0 | 80.0 |

| | | |
|---|---|---|
| ¹ PY128 yellow pigment, commercially available from CIBA. | | |

The ingredients listed above were mixed in a water-cooled one liter jacketed stainless steel beaker with an inside diameter of 9.9 cm. The ingredients were mixed using a Premier Mill Laboratory Dispersator Model 2000 equipped with a 7.6 cm smooth plastic blade. 300.0 g of glass beads was used as the milling media for the mixture. The glass beads possessed a mean diameter of 71 microns. The beads are available from Potters Glass, Inc.

The mixture was milled at 6000 rpm for 13 hours. The progress of the milling was monitored by measuring the visible spectra of samples and observing the decrease in absorbance at a wavelength of 500 nanometers. During the course of the milling, 230.0g additional water was added as needed to offset the increasing viscosity of the mixture and 300.0 g additional glass beads was also added. The mixture was filtered through a 5 micron felt bag to remove the glass beads. The product had a non-volatile content of 29.3% as measured at 110°C for one hour.

### EXAMPLE H

### Emperor 2000 carbon black pigment dispersion

This example describes the preparation of an Emperor 2000 carbon black pigment dispersion which was subsequently used to form the dispersion of Example 3. The pigment dispersion was prepared from a mixture of the following ingredients in the ratios indicated below:

| **Ingredients** | **Weight (grams)** | **Solid Weight (grams)** |
|---|---|---|
| PETROLITE D1038¹ | 40.0 | 4.0 |
| Deionized water | 48.5 | -- - |
| SURFYNOL 104E² | 0.5 | 0.25 |
| Emperor 2000³ | 10.5 | 10.5 |
| BYK 024⁴ | 0.5 | 0.5 |

| | | |
|---|---|---|
| ¹ Petrolite D1038 ethoxylated polyethylene dispersant, commercially available from Baker Petrolite. ² Surfynol 104E surfactant, commercially available from Air Products, Inc. ³ Emperor 2000 carbon black pigment, commercially available from Cabot Corp. ⁴ Byk 024 polysiloxane, commercially available from Byk Chemie. | | |

The ingredients were milled in a FrymaKoruma Coball-Mill with 1 mm titanium spheres. The mixture was milled for 30 minutes at 2500 rpm with a flow rate of 9 liters/hour. The product had a non-volatile content of 14.2% as measured at 110°C for one hour and a viscosity of 30 seconds measured using a #4 DIN cup.

### EXAMPLE I

### Nano-sized PB 15:3 phthalocyanine blue pigment dispersion

This example describes the preparation of a nano-sized PB 15:3 phthalocyanine blue pigment dispersion which was subsequently used to form the dispersion of Example 4. The pigment dispersion was prepared from a mixture of the following ingredients in the ratios indicated below:

| **Ingredients** | **Weight (grams)** | **Solid Weight (grams)** |
|---|---|---|
| Deionized water | 8482.1 | --- |
| IGEPAL CO-897¹ | 127.0 | 88.9 |
| Dimethylethanolamine | 221.8 | --- |
| Propylene glycol monobutyl ether | 884.5 | --- |
| Polyurethane of Example A | 5307.0 | 3184 |
| Soya lechithin | 176.9 | 176.9 |
| Mineral spirits | 884.5 | --- |
| Dodecylbenzenesulfonic acid² | 253.6 | 177.5 |
| PB 15:3 pigment | 2358.7 | 2358.7 |

| | | |
|---|---|---|
| ¹ IGEPAL CO-897 non-ionic surfactant, commercially available from Rhodia. ² Dodecylbenzenesulfonic acid is 70% in isopropanol. | | |

The ingredients were ground in an Advantis V15 Drais mill containing 0.3 mm YTZ grinding media. The mixture was milled at 1650 rpm for a total residence time of 157 minutes. The progress of the milling was monitored by measuring the visible spectra of samples and observing the decrease in absorbance at a wavelength of 400 nanometers. During the course of the milling portions of the mixture were removed and Solsperse 27000 was added incrementally to make a final mixture that contained 12.28% pigment and 2.67% Solsperse 27000.

### EXAMPLE J

### Nano-sized PR122 quinacridone pigment dispersion

This example describes the preparation of a nano-sized PR122 quinacridone pigment dispersion which was subsequently used to form the dispersion of Example 5. The pigment dispersion was prepared from a mixture of the following ingredients in the ratios indicated below:

| **Ingredients** | **Weight (grams)** | **Solid Weight (grams)** |
|---|---|---|
| Acrylic dispersant of Example D | 15.2 | 15.0 |
| Deionized water | 120.0 | --- |
| PR122 pigment¹ | 15.0 | 15.0 |

| | | |
|---|---|---|
| ¹ PR122 quinacridone pigment, commercially available from Sun Chemical. | | |

The ingredients were mixed in a water-cooled one liter jacketed stainless steel beaker with an inside diameter of 9.9 cm using a Premier Mill Laboratory Dispersator Model 2000 equipped with a 3.8 cm cowles blade. 600.0 g of glass beads was used as the milling media for the mixture. The glass beads possessed a mean diameter of 71 microns. The beads are available from Potters Glass, Inc. The mixture was milled at 8000 rpm for 13 hours. The progress of the milling was monitored by measuring the visible spectra of samples and observing the decrease in absorbance at a wavelength of 400 nanometers. During the course of the milling, 25.0 g additional water was added as needed to offset the increasing viscosity of the mixture. The mixture was filtered through a 1 micron felt bag to remove the glass beads. The product had a non-volatile content of 17.8% as measured at 110°C for one hour.

### EXAMPLE K

### Nano-sized PY42 yellow transparent iron oxide pigment dispersion

This example describes the preparation of a PY42 yellow transparent iron oxide pigment dispersion which was subsequently used to form the aqueous dispersion of microparticles of Example 2. The pigment dispersion was prepared from a mixture of the following ingredients in the ratios indicated below:

| **Ingredients** | **Weight (grams)** | **Solid Weight (grams)** |
|---|---|---|
| SOLSPERSE 32000 | 60.0 | 60.0 |
| Propylene glycol n-propyl ether | 164 | --- |
| PY42 pigment¹ | 60.0 | 60.0 |

| | | |
|---|---|---|
| ¹PY42 Sicotrans Yellow L1916, commercially available from BASF. | | |

The ingredients listed above were mixed in a water-cooled one liter jacketed stainless steel beaker with an inside diameter of 9.9 cm. The ingredients were mixed using a Premier Mill Laboratory Dispersator Model 2000 equipped with a 7.6 cm smooth plastic blade. 1600.0 g of 0.8-1.2 mm Zirconox beads was used as the milling media for the mixture. The mixture was milled at 5000 rpm for 2 hours. The mixture was filtered through a large filter cone to remove the Zirconox beads. The product had a non-volatile content of 41.8% as measured at 110°C for one hour.

### EXAMPLE L

### Nano-sized PR101 red transparent iron oxide pigment dispersion

This example describes the preparation of a PR101 red transparent iron oxide pigment dispersion which was subsequently used to form the aqueous dispersion of microparticles of Example 2. The pigment dispersion was prepared from a mixture of the following ingredients in the ratios indicated:

| **Ingredients** | **Weight (grams)** | **Solid Weight (grams)** |
|---|---|---|
| SOLSPERSE 32000 | 60.0 | 60.0 |
| Propylene glycol n-propyl ether | 160 | --- |
| PR101 pigment¹ | 60.0 | 60.0 |

| | | |
|---|---|---|
| ¹ PR101 Sicotrans Red L2817, commercially available from BASF Corp. | | |

The ingredients listed above were mixed in a water-cooled one liter jacketed stainless steel beaker with an inside diameter of 9.9 cm. The ingredients were mixed using a Premier Mill Laboratory Dispersator Model 2000 equipped with a 7.6 cm smooth plastic blade. 1600.0 g of 0.8-1.2 mm Zirconox beads was used as the milling media for the mixture.

The mixture was milled at 5000 rpm for 2.5 hours. The mixture was filtered through a large filter cone to remove the Zirconox beads. The product had a non-volatile content of 39.4% as measured at 110°C for one hour.

### AQUEOUS DISPERSIONS OF MICROPARTICLES

### EXAMPLE 1

### 10% nano-sized PB 15:3

This example describes the preparation of an aqueous dispersion of microparticles which contains nano-sized PB 15:3 phthalocyanine blue pigment. The dispersion was prepared from the following ingredients:

| **Ingredients** | **Weight (grams)** |
|---|---|
| **Charge I** | |
| Deionized water | 256.8 |
| IGEPAL CO-897 | 3.4 |
| Soya lecithin | 4.8 |
| Dimethylethanolamine | 6.3 |
| Dodecylbenzenesulfonic acid¹ | 6.9 |
| Polyurethane of Example A | 144.0 |
| Polyester of Example B | 48.0 |
| CYMEL 303² | 36.0 |
| Ethylene glycol dimethacrylate | 7.2 |
| Methyl methacrylate | 14.4 |
| ISOPAR K³ | 24.0 |
| PB 15:3 phthalocyanine blue pigment dispersion of Example F | 210.0 |

| **Charge II** | |
|---|---|
| Deionized water | 36.0 |

| **Charge III** | |
|---|---|
| Sodium metabisulfite | 0.6 |
| Ferrous ammonium sulfate | 0.01 |
| Deionized water | 7.2 |

| **Charge IV** | |
|---|---|
| 70% t-butyl hydroperoxide | 0.5 |
| Deionized water | 14.4 |

| **Charge V** | |
|---|---|
| Dimethylethanolamine | 0.19 |
| Deionized water | 0.38 |

| | |
|---|---|
| ¹ Dodecylbenzenesulfonic acid, 70% in isopropanol. ² Melamine commercially available from Cytec Industries, Inc. ³Aliphatic hydrocarbon solvent commercially available from Exxon, Inc. | |

A pre-emulsion was made by stirring Charge I with a cowles blade in a stainless steel beaker. The pre-emulsion was recycled through a Microfluidizer© M110T at 8000 psi for one hour and transferred to a fourneck round bottom flask equipped with an overhead stirrer, condenser, electronic temperature probe, and a nitrogen atmosphere. Charge II was used to rinse the Microfluidizer© and added to the flask. The temperature of the microemulsion was adjusted to 30°C. The polymerization was initiated by adding Charge III followed by a 30 minute addition of Charge IV. The temperature of the reaction increased to 37°C. The temperature was reduced to 28°C, and Charge V was added. The final pH of the dispersion was 8.2, the nonvolatile content was 37.1%, the Brookfield viscosity was 26 cps (spindle #1, 50 rpm), and the mean particle size was 120 nanometers as measured using a Zetasizer 1000HS from Malvern Instruments, Ltd.

### EXAMPLE 2

### Dispersion with nano-sized PY128

This example describes the preparation of an aqueous dispersion of microparticles which contains nano-sized PY128 yellow pigment. The dispersion was prepared from the following ingredients:

| **Ingredients** | **Weight (grams)** |
|---|---|
| **Charge I** | |
| Deionized water | 214.0 |
| IGEPAL CO-897 | 2.8 |
| Soya lecithin | 4.0 |
| Dimethylethanolamine | 5.0 |
| Dodecylbenzenesulfonic acid¹ | 5.7 |
| Polyurethane of Example A | 120.0 |
| Polyester of Example B | 40.0 |
| CYMEL 303 | 30.0 |
| Ethylene glycol dimethacrylate | 6.0 |
| Methyl methacrylate | 12.0 |
| ISOPAR K | 20.0 |
| PY128 yellow pigment dispersion of Example G | 180.8 |

| **Charge II** | |
|---|---|
| Deionized water | 30.0 |

| **Charge III** | |
|---|---|
| Sodium metabisulfite | 0.5 |
| Ferrous ammonium sulfate | 0.01 |
| Deionized water | 6.0 |

| **Charge IV** | |
|---|---|
| 70% t-butyl hydroperoxide | 0.4 |
| Deionized water | 12.0 |

| **Charge V** | |
|---|---|
| Dimethylethanolamine | 0.4 |
| Deionized water | 0.8 |

| | |
|---|---|
| ¹ Dodecylbenzenesulfonic acid is 70% in isopropanol. | |

A pre-emulsion was made by stirring Charge I with a cowles blade in a stainless steel beaker. The pre-emulsion was recycled through a Microfluidizer© M110T at 8000 psi for one hour and transferred to a fourneck round bottom flask equipped with an overhead stirrer, condenser, electronic temperature probe, and a nitrogen atmosphere. Charge II was used to rinse the Microfluidizer© and added to the flask. The temperature of the microemulsion was adjusted to 30°C. The polymerization was initiated by adding Charge III followed by a 30 minute addition of Charge IV. The temperature of the reaction increased to 39°C. The temperature was reduced to 30°C, and Charge V was added. The final pH of the dispersion was 8.2, the nonvolatile content was 35.5%, the Brookfield viscosity was 28 cps (spindle #1, 50 rpm), and the mean particle size was 94 nanometers as measured using a Malvern HHPS(1.10) from Malvern Instruments, Ltd.

### EXAMPLE 3

### Dispersion with nano-sized carbon black pigment

This example describes the preparation of an aqueous dispersion of microparticles which contains nano-sized Emperor 2000 carbon black pigment. The dispersion was prepared from the following ingredients:

| **Ingredients** | **Weight (grams)** |
|---|---|
| **Charge I** | |
| Deionized water | 294.0 |
| Dimethylethanolamine | 3.0 |
| Propylene glycol monobutyl ether | 40.0 |
| Polyurethane / urea of Example C | 152.73 |
| Methyl methacrylate | 27.46 |
| Butyl acrylate | 27.46 |
| Emperor 2000 carbon black pigment dispersion of Example H | 70.0 |

| **Charge II** | |
|---|---|
| Deionized water | 40.0 |

| **Charge III** | |
|---|---|
| Sodium metabisulfite | 0.4 |
| Ferrous ammonium sulfate | 0.01 |
| Deionized water | 4.0 |

| **Charge IV** | |
|---|---|
| 70% t-butyl hydroperoxide | 0.4 |
| Deionized water | 12.0 |

| **Charge V** | |
|---|---|
| Dimethylethanolamine | 2.61 |

A pre-emulsion was made by stirring Charge I with a cowles blade in a stainless steel beaker. The pre-emulsion was recycled through a Microfluidizer© M110T at 8000 psi for 30 minutes and transferred to a fourneck round bottom flask equipped with an overhead stirrer, condenser, electronic temperature probe, and a nitrogen atmosphere. Charge II was used to rinse the Microfluidizer© and added to the flask. The temperature of the microemulsion was adjusted to 30°C. The polymerization was initiated by adding Charge III followed by a 30 minute addition of Charge IV. The temperature of the reaction increased to 53°C. The temperature was reduced to 30°C, and Charge V was added. The final pH of the dispersion was 8.0, the nonvolatile content was 30.3%, the Brookfield viscosity was 110 cps (spindle #2, 50 rpm), and the mean particle size was 65 nanometers as measured using a Malvern HHPS(1.10)from Malvern Instruments, Ltd.

### EXAMPLE 4

### Dispersion with 22% nano-sized PB 15:3 pigment

This example describes the preparation of an aqueous dispersion of microparticles which contains nano-sized PB 15:3 phthalocyanine blue pigment. The dispersion was prepared from the following ingredients:

| **Ingredients** | **Weight (grams)** |
|---|---|
| **Charge I** | |
| Deionized water | 70.0 |
| PB 15:3 phthalocyanine blue pigment dispersion of Example I | 434.19 |
| Ethylene glycol dimethacrylate | 6.0 |
| Butyl acrylate | 20.0 |
| Methyl methacrylate | 32.0 |
| ISOPAR K | 24.0 |

| **Charge II** | |
|---|---|
| Deionized water | 40.0 |

| **Charge III** | |
|---|---|
| Sodium metabisulfite | 0.4 |
| Ferrous ammonium sulfate | 0.01 |
| Deionized water | 4.0 |

| **Charge IV** | |
|---|---|
| 70% t-butyl hydroperoxide | 0.4 |
| Deionized water | 8.0 |

| **Charge V** | |
|---|---|
| Dimethylethanolamine | 0.8 |

A pre-emulsion was made by stirring Charge I with a cowles blade in a stainless steel beaker. The pre-emulsion was recycled through a Microfluidizer© M110T at 8000 psi for 30 minutes and transferred to a fourneck round bottom flask equipped with an overhead stirrer, condenser, electronic temperature probe, and a nitrogen atmosphere. Charge II was used to rinse the Microfluidizer© and added to the flask. The temperature of the microemulsion was adjusted to 30°C. The polymerization was initiated by adding Charge III followed by a 30 minute addition of Charge IV. The temperature of the reaction increased to 51 °C. The temperature was reduced to 28°C, and Charge V was added. The final pH of the dispersion was 8.0, the nonvolatile content was 38.4%, the Brookfield viscosity was 199 cps (spindle #2, 60 rpm), and the mean particle size was 136 nanometers as measured using a Zetasizer 1000HS from Malvern Instruments, Ltd.

The solid portion of this latex consisted of 21.7% pigment, 69.2% polymer, 4.1% surfactant, and 4.7% pigment dispersant (Solsperse 27000).

### EXAMPLE 5

### Dispersion with nano-sized PR 122 quinacridone pigment

This example describes the preparation of an aqueous dispersion of microparticles which contains nano-sized PR 122 quinacridone pigment. The dispersion was prepared from the following ingredients:

| **Ingredients** | **Weight (grams)** |
|---|---|
| **Charge I** | |
| Deionized water | 97.8 |
| Dimethylethanolamine | 0.47 |
| Polyurethane / urea of Example C | 29.78 |
| Butyl acrylate | 5.35 |
| Methyl methacrylate | 5.35 |

| **Charge II** | |
|---|---|
| PR122 quinacridone piqment dispersion of Example J | 104.98 |

| **Charge III** | |
|---|---|
| Deionized water | 40.0 |

| **Charge IV** | |
|---|---|
| Sodium metabisulfite | 0.1 |
| Ferrous ammonium sulfate | 0.01 |
| Deionized water | 1.0 |

| **Charge V** | |
|---|---|
| 70% t-butyl hydroperoxide | 0.1 |
| Deionized water | 5.0 |

| **Charge VI** | |
|---|---|
| Dimethylethanolamine | 0.24 |
| Deionized water | 0.48 |

round bottom flask equipped with an overhead stirrer, condenser, electronic temperature probe, and a nitrogen atmosphere. Charge III was used to rinse the Microfluidizer© and added to the flask. The temperature of the microemulsion was adjusted to 30°C. The polymerization was initiated by adding Charge IV followed by a 30 minute addition of Charge V. The temperature of the reaction increased to 34°C. The temperature was reduced to 30°C and Charge VI was added. Using a rotary evaporator, water was removed until the dispersion had a nonvolatile content of 38.9%. The final pH of the dispersion was 7.6, the Brookfield viscosity was 220 cps (spindle #4, 50 rpm), and the mean particle size was 267 nanometers as measured using a Malvern HHPS(1.10) from Malvern Instruments, Ltd.

### EXAMPLE 6

### Dispersion with nano-sized Tiona 595 white pigment

This example describes the preparation of an aqueous dispersion of microparticles which contains nano-sized Tiona 595 titanium dioxide pigment. The dispersion was prepared from the following ingredients:

| **Ingredients** | **Weight (grams)** |
|---|---|
| **Charge I** | |
| Propylene glycol monobutyl ether | 60.0 |
| Butyl methacrylate | 141.0 |
| Hydroxypropyl methacrylate | 9.0 |
| IGEPAL CO897 | 8.6 |
| TIONA 595¹ | 312.0 |

| **Charge II** | |
|---|---|
| Polyurethane / urea dispersion of Example E | 383.5 |
| Deionized water | 47.0 |

| **Charge III** | |
|---|---|
| Deionized water | 50.0 |

| **Charge IV** | |
|---|---|
| 70% t-butyl hydroperoxide | 0.75 |
| Ferrous ammonium sulfate | 0.01 |
| Deionized water | 10.0 |

| **Charge V** | |
|---|---|
| Sodium metabisulfite | 0.75 |
| Deionized water | 10.0 |

| | |
|---|---|
| ¹ Tiona 595 rutile titanium dioxide, commercially available from Millennium Chemicals, Inc. | |

A pigment dispersion was prepared by stirring Charge I with a cowles blade in a stainless steel beaker. Charge II was added to make a pre-emulsion. The pre-emulsion was recycled through a Microfluidizer© M110T at 8000 psi for 10 minutes and transferred to a fourneck round bottom flask equipped with an overhead stirrer, condenser, electronic temperature probe, and a nitrogen atmosphere. Charge III was used to rinse the Microfluidizer© and added to the flask. The temperature of the microemulsion was adjusted to 30°C. The polymerization was initiated by adding Charge IV followed by a 30 minute addition of Charge V. The temperature of the reaction increased to 47°C. The final pH of the dispersion was 7.1, the nonvolatile content was 49.5%, the Brookfield viscosity was 569 cps (spindle #3, 60 rpm), and the mean particle size was 276 nanometers as measured using a Zetasizer 1000HS from Malvern Instruments, Ltd.

### EXAMPLE 7

### Dispersion with nano-sized PY 42 transparent yellow iron oxide

This example describes the preparation of an aqueous dispersion of microparticles which contains transparent yellow iron oxide pigment, PY 42. The dispersion was prepared from the following ingredients:

| **Ingredients** | **Weight (grams)** |
|---|---|
| **Charge I** | |
| Deionized water | 90.0 |
| Polyurethane / urea dispersion of Example E1 | 285.7 |
| Methyl methacrylate | 80.0 |

| **Charge II** | |
|---|---|
| Propylene glycol monobutyl ether | 36.0 |
| SOLSPERSE 27000 | 4.2 |
| PY 42 yellow iron oxide pigment dispersion of Example K | 20.4 |

| **Charge III** | |
|---|---|
| Deionized water | 30.0 |

| **Charge IV** | |
|---|---|
| Deionized water | 4.0 |
| Ferrous ammonium sulfate | 0.01 |
| Sodium metabisulfite | 0.4 |

| **Charge V** | |
|---|---|
| Deionized water | 16.0 |
| 70% t-butyl hydroperoxide | 0.4 |

A pre-emulsion was made by stirring Charge I with a cowles blade in a stainless steel beaker. Charge I was recycled through a Microfluidizer© M110T at 8000 psi for 10 minutes while Charge II was added simultaneously. The combined mixture was circulated for an additional 10 minutes and then transferred to a fourneck round bottom flask equipped with an overhead stirrer, condenser, electronic temperature probe, and a nitrogen atmosphere. Charge III was used to rinse the Microfluidizer© and added to the flask. The temperature of the microemulsion was adjusted to 30°C. The polymerization was initiated by adding Charge IV followed by a 30 minute addition of Charge V. The temperature of the reaction increased to 55°C. The final pH of the dispersion was 7.1, the nonvolatile content was 37.4%, the Brookfield viscosity was 95.4 cps (spindle #2, 60 rpm), and the mean particle size was 115 nanometers as measured using a Zetasizer 1000HS from Malvern Instruments, Ltd.

### EXAMPLE 8

### Dispersion with nano-sized PR 101 transparent red iron oxide pigment

This example describes the preparation of an aqueous dispersion of microparticles which contains transparent red iron oxide pigment, PR 101. The dispersion was prepared from the following ingredients:

| **Ingredients** | **Weight (grams)** |
|---|---|
| **Charge I** | |
| Deionized water | 90.0 |
| Polyurethane / urea dispersion of Example E1 | 285.7 |
| Methyl methacrylate | 80.0 |

| **Charge II** | |
|---|---|
| Propylene glycol monobutyl ether | 36.0 |
| SOLSPERSE 27000 | 4.2 |
| PR 101 red iron oxide pigment dispersion of Example L | 21.6 |

| **Charge III** | |
|---|---|
| Deionized water | 30.0 |

| **Charge IV** | |
|---|---|
| Deionized water | 4.0 |
| Ferrous ammonium sulfate | 0.01 |
| Sodium metabisulfite | 0.4 |

| **Charge V** | |
|---|---|
| Deionized water | 16.0 |
| 70% t-butyl hydroperoxide | 0.4 |

A pre-emulsion was made by stirring Charge I with a cowles blade in a stainless steel beaker. Charge I was recycled through a Microfluidizer© M110T at 8000 psi for 10 minutes while Charge II was added simultaneously. The combined mixture was circulated for an additional 10 minutes and then transferred to a fourneck round bottom flask equipped with an overhead stirrer, condenser, electronic temperature probe, and a nitrogen atmosphere. Charge III was used to rinse the Microfluidizer© and added to the flask. The temperature of the microemulsion was adjusted to 30°C. The polymerization was initiated by adding Charge IV followed by a 30 minute addition of Charge V. The temperature of the reaction increased to 55°C. The final pH of the dispersion was 7.0, the nonvolatile content was 36.3%, the Brookfield viscosity was 145 cps (spindle #2, 60 rpm), and the mean particle size was 118 nanometers as measured using a Zetasizer 1000HS from Malvern Instruments, Ltd.

### EXAMPLE 9

### Dispersion with nano-sized PB 15:1 phthalo blue pigment

This example describes the preparation of an aqueous dispersion of microparticles which contains conventional pigment, PB 15:1. The dispersion was prepared from the following ingredients:

| **Ingredients** | **Weight (grams)** |
|---|---|
| **Charge I** | |
| Deionized water | 30.0 |
| Polyurethane / urea dispersion of Example E1 | 385.71 |
| Propylene glycol monobutyl ether | 60.0 |
| Butyl acrylate | 38.0 |
| T 412 pigment paste¹ | 192.0 |

| **Charge II** | |
|---|---|
| Deionized water | 30.0 |

| **Charge III** | |
|---|---|
| Deionized water | 10.0 |
| Ferrous ammonium sulfate | 0.01 |
| Sodium metabisulfite | 0.4 |

| **Charge IV** | |
|---|---|
| Deionized water | 10.0 |
| 70% t-butyl hydroperoxide | 0.4 |

| | |
|---|---|
| ¹BT-729-D Endurphthalo Blue, PB 15:1 pigment; EFKA 4550 modified polyacrylate dispersant from Efka Chemicals; Deionized Water (20.2 / 19.6 / 60.2 weight percent). Commercially available from PPG Industries. | |

A pre-emulsion was made by stirring Charge I with a cowles blade in a stainless steel beaker. Charge I was recycled through a Microfluidizer© M110T at 8000 psi for 15 minutes and then transferred to a fourneck round bottom flask equipped with an overhead stirrer, condenser, electronic temperature probe, and a nitrogen atmosphere. Charge II was used to rinse the Microfluidizer© and added to the flask. The temperature of the microemulsion was adjusted to 30°C. The polymerization was initiated by adding Charge III followed by a 30 minute addition of Charge IV. The temperature of the reaction increased to 44°C. The final pH of the dispersion was 7.2, the nonvolatile content was 33.6%, and the Brookfield viscosity was 1470 cps (spindle #3, 60 rpm).

### COMPARATIVE EXAMPLE 1

This comparative example describes the preparation of a black basecoat composition by mixing the carbon black pigment dispersion of Example H with a standard aqueous acrylic dispersion composition. The composition was prepared by mixing the following ingredients sequentially under mild agitation:

| **Ingredients** | **Weight (grams)** | **Solid Weight (grams)** |
|---|---|---|
| SETALUX 6801¹ | 45.81 | 11.45 |
| Butyl Cellosolve² | 6.44 | --- |
| Deionized water | 35.12 | --- |
| Dimethylethanolamine | 0.16 | --- |
| SURFYNOL 104E³ | 0.95 | 0.47 |
| JONCRYL 8004⁴ | 1.81 | 0.59 |
| Carbon black pigment dispersion of Example H | 9.71 | 1.48 |

| | | |
|---|---|---|
| ¹Setalux 6801 aqueous acrylic dispersion, commercially available from AKZO NOBEL Resins. ²Butyl Cellosolve solvent, commercially available from Eastman. ³ Surfynol 104E surfactant, commercially available from Air Products, Inc. ⁴Joncryl 8004 aqueous acrylic dispersion, commercially available from S.C. Johnson. | | |

Several black basecoat compositions were spray applied over primed electrocoated steel panels. These basecoat compositions included T408 Envirobase Black Basecoat, and 9700 Global Black Basecoat, both commercially available from PPG Industries, Inc. The basecoats also included Comparative Example 1 and the dispersion with nano-sized carbon black pigment composition of Example 3. Test panels were cold rolled steel panels (size 4 inches x 12 inches (10.16 cm by 30.48 cm)). The steel panels were coated with ED5000 electrocoat, available from PPG Industries, Inc, and GPXH5379 primer surfacer, also available from PPG Industries, Inc. The test panels are available as APR41428 from ACT Laboratories, Inc. of Hillsdale, Michigan.

The steel panels were wet sanded with P600 grit sand paper, washed with water, and dried. A primer was hand-spray applied to the sanded panels. The primer was D824 Prime Fill, available from PPG Industries, Inc. The primer was mixed with D852 Prime Fill Catalyst (PPG Industries, Inc.) at a volumetric ratio of 1:1 as indicated by the instructions provided on the product data sheet. The panels were baked at 140°F (60°C) for 30 minutes and then allowed to cool to ambient temperature. The panels were once again wet sanded with P600 grit sand paper, washed with water, and dried. The panels were then wiped with DX330 Degreaser available from PPG Industries, Inc.

The black basecoat compositions were hand-spray applied over the prepared steel panels using a DeVilbiss GTI HVLP gravity feed spray gun equipped with a 413 needle, 1.2 air nozzle, and No. 2000 air cap. Air pressure at the base of the gun was 28 lbs/inch² (2 kg/cm³). Both the T408 Envirobase Black Basecoat and 9700 Global Black Basecoat were prepared for spray application as the respective product data sheets instructed. Comparative Example 1 and Latex Example 3 were sprayed with no additional modifications.

Each black basecoat composition was applied in two coats with an approximate 5 minute flash between coats at about 70°F (21 °C) temperature and about 40% relative humidity. A black and white hiding chart indicated the basecoat film build achieved complete hiding of the substrate. The coating was allowed to ambient flash about 30 minutes prior to clearcoat application.

The clearcoat was hand-spray applied using the same spray gun as was used for the black basecoats. The clearcoat was Concept® DCU2021 Urethane Clear available from PPG Industries, Inc. The clearcoat was mixed with DCX61 High Solids Hardener (PPG Industries, Inc.) and D871 Medium Thinner (PPG Industries, Inc.) at a volumetric ratio of 3:1:0.5. The clearcoat was applied in two coats with a 10 minute ambient flash between the coats at about 70°F (21°C) temperature and about 40% relative humidity. A dry film thickness of about 1.97-2.17 mils (about 50 to 55 micrometers) was achieved. The panels were allowed to ambient cure in a horizontal position for 7 days prior to testing.

The cured panels with both the basecoat and clearcoat layers were measured for jetness using the Minolta CM-3600d Spectrophotometer. The panels were measured via CIE lab color measurement application at a 10 degree angle under D65 daylight light source.

CIELab color space is defined in terms of L, a, and b. "L" is the measure of lightness / darkness with a lower number yielding a darker color. "b" is the measure of blue / yellow with a lower number yielding a bluer color. "a" is the measure of red / green with a lower number yielding a greener color. L, a, and b were automatically calculated from measured tristimulus values X, Y, Z based on the following equations: L = 116f(Y/Yn)-16; a = 500[f(X/Xn)-f(Y/Yn)]; b = 200[f(Y/Yn)-f(Z/Zn)], where Xn, Yn, and Zn are the coordinates of a standard white sample that is used to calibrate the instrument prior to use.² (See Colloins, P. et al., New Chemical Modification Technology Offers Breakthrough in Carbon Black Pigments for Automotive Coatings, Paper No. 980714 (1998).)

In order to obtain measurements that are representative of the human perception of "blackness", the color Dependent Black Value (Mc) was developed by K. Lippok-Lohmer. (See Lippok-Lohmer, K., Farbe+Lacke, 92, p1024 (1986).)

Mc = 100[log(Xn/X) - log(Zn/Z) + log(Yn/Y)]Where the higher Mc value correlates with the human perception of increased jetness. The Mc value is reported below using the values of L, a, and b generated from the spectrophotometer measurements.

**Table 1**

| Sample | Black Basecoat Description | Dry film thickness (mils) *µ*m | L | a | b | Mc |
|---|---|---|---|---|---|---|
| 1* | Envirobase T408¹ #010584026 | (0.28-0.36) 7.1 - 9.1 | 25.65 | -0.06 | -0.74 | 134.83 |
| 2* | Black Basecoat (see Table 1) | (0.35-0.38) 8.9 - 9.7 | 25.29 | 0.00 | -0.9 | 136.22 |
| 3 | Dispersion of Example 3 | (1.59-1.75) 40.4 - 44.5 | 25.07 | 0.03 | -0.80 | 136.72 |
| 4* | Global D9700² #G41995 | (0.51-0.56) 13.0 - 14.2 | 25.30 | -0.02 | -0.64 | 135.73 |

| | | | | | | |
|---|---|---|---|---|---|---|
| * indicates a comparative example ¹ T408 Envirobase Black Basecoat is commercially available from PPG Industries, Inc. ² Global D9700 Basecoat Black is commercially available from PPG Industries, Inc. | | | | | | |

The jetness measurement data presented in Table 1 above illustrates the dispersion in accordance with the present invention containing the nano-sized carbon black of Example 3 has the highest Mc value of the black basecoats evaluated via the same measurement. This higher value correlates with the human perception of increased jetness.

### Example 10

The liquid coating compositions of Samples 1 and 2 (below) were prepared for spray application using the aqueous dispersion of microparticles of Examples 7 and 8, respectively. The coatings were prepared by mixing the ingredients in Table 2 sequentially under mild agitation.

**Table 2**

| | Sample 1 | | Sample 2 | |
|---|---|---|---|---|
| Ingredients | Weight (grams) | Solid Weight (grams) | Weight (grams) | Solid Weight (grams) |
| Dispersion of Example 7 | 68.79 | 25.89 | | --- |
| Dispersion of Example 8 | --- | --- | 68.93 | 25.89 |
| Diisopropyl amine | 0.43 | --- | 0.43 | --- |
| AQUAFLOW NLS210 Solution³ | 1.15 | 0.13 | 1.15 | 0.13 |
| BAYSILONE 3739⁴ | 0.23 | 0.17 | 0.23 | 0.17 |
| WR-43-4942⁵ | 6.96 | 2.61 | 6.96 | 2.61 |
| Deionized Water | 22.00 | --- | 22.00 | --- |

| | | | | |
|---|---|---|---|---|
| ³Aquaflow NLS 210 rheology modifier, commercially available from Hercules, Inc. was used to prepare the following pre-solution: Deionized water; Diethylene glycol monobutyl ether; Aquaflow NLS 210 at 20 / 5 / 20 weight ratio respectively. ⁴Baysilone 3739, polyether-modified methyl polysiloxane commercially available from Bayer Corporation. ⁵Water-reducible polyurethane resin formed from adipic acid dihydrazide, dimethylol propionic acid, poly (tetramethylene ether) glycol, isophorone diisocyanate (3.0 / 6.1 / 68.2 / 22.7 weight ratio) at 37.5% solids in dimethylethanol amine, methyl ethyl ketone, and deionized water (2.6 / 0.8 / 96.6 weight ratio). | | | | |

Coating compositions of Sample 1 and Sample 2 were hand-spray applied over 5252 polished aluminum alloy panels using a DeVilbiss GTI HVLP gravity feed spray gun equipped with a 413 needle, 1.2 air nozzle, and No. 2000 air cap. Air pressure at the base of the gun was 28 lbs/inch² (2 kg/cm³). Sample 1 and Sample 2 were hand-spray applied with no additional modification.

Each liquid coating was applied in two coats with an approximate 10 minute flash between coats at about 70°F (21°C) and about 68% relative humidity. The panels were allowed to ambient cure in a horizontal position for 4 days prior to testing.

The cured panels were tested for 20 degree gloss, dry film thickness, and Konig Hardness. General visual observations of the cured films were also noted. The 20 degree gloss was measured using a BYK Gardner micro-TRI-gloss instrument. Dry film thickness was measured using the Fisherscope MMS (Multi-measuring System) instrument. The appropriate probe was chosen to measure the dry film thickness of each coating. The value is reported in Table 2 in µm (mils). Konig Hardness was measured using a Byk Gardner Pendulum Hardness Tester.

The procedure for performing the Konig Hardness test begins by placing the glass block standard on the stand. The equipment must be level. Then the fulcrum balls of the pendulum are cleaned by wiping with a soft tissue wetted with mineral spirit solvent and allowing them to completely dry. The pendulum is lowered gently onto the glass block standard. Next, the pendulum is deflected without lateral displacement of the fulcrum to 6 degrees and allowed to rest against the stop on the stand of the equipment. The pendulum is released and the counter is started simultaneously. The time (in seconds) is recorded and should be 250+/-10 seconds in order to ensure the equipment is within specification.

Once verification is complete, the test panel is placed on the table of the stand with the coating film facing upward. The same procedure used to verify the equipment is repeated to measure the test panel. The time (in seconds) corresponds to the film hardness. A larger number corresponds to a harder film.

Results for the described tests are reported in Table 3 below.

**Table 3**

| **Sample** | **Dry Film *µ*m Thickness (mils)** | **Gloss 20 degree** | **Konig Hardness (seconds)** |
|---|---|---|---|
| 1 | (1.71-1.87) 43.4 - 47.5 | 85 | 115 |
| 2 | (1.00-1.10) 25.4 - 28.0 | 87 | 80 |

Coating compositions of Sample 1 and Sample 2 both had a visually transparent appearance over the polished aluminum substrate that gave the effect of brass and copper metals respectively.

### EXAMPLE 11

The liquid coating composition of Sample 3 was prepared using the dispersion of Example 9. The coating was prepared by mixing the following ingredients sequentially under mild agitation.

**Table 4**

| | Sample 3 | |
|---|---|---|
| Ingredients | Weight (grams) | Solid Weight (grams) |
| Example 9 Latex | 87.45 | 29.86 |
| Diisopropyl amine | 0.43 | --- |
| AQUAFLOW NLS210 Solution | 1.15 | 0.13 |
| BAYSILONE 3739 | 0.23 | 0.17 |
| WR-43-4942 | 6.96 | 2.61 |
| Deionized Water | 22.00 | --- |

The composition of Sample 3 was hand-mixed with Envirobase T483 Medium Aluminum, commercially available from PPG Industries, Inc., at a ratio of 1:1 blue pigment weight to aluminum pigment weight to produce the composition of Sample 5. Sample 5 was compared to Comparative Sample 4 prepared as indicated in Table 5 below. Comparative Sample 4 was mixed at a ratio of 1:1 by weight blue pigment to aluminum pigment as well. It should also be noted that Comparative Sample 4 uses the same pigment (BT-729-D Endurphthalo Blue, 15:1) as Sample 5.

**Table 5**

| | Comparative Sample 4 | | | Sample 5 | | |
|---|---|---|---|---|---|---|
| Ingredients | Weight (grams) | Resin Solid Weight (grams) | Pigment Solid Weight (grams) | Weight (grams) | Solid Weight (grams) | Pigment Solid Weight (grams) |
| T412⁶ | 74.38 | 10.48 | 1.80 | --- | --- | --- |
| Sample 3 | --- | --- | --- | 50.00 | 11.96 | 1.90 |
| T483⁷ | 57.69 | 8.38 | 1.80 | 60.90 | 8.84 | 1.90 |

| | | | | | | |
|---|---|---|---|---|---|---|
| ⁶Envirobase T412, Transparent Blue, is commercially available from PPG Industries, Inc. T412 contains BT-729-D Endurphthalo Blue, 15:1 pigment. ⁷Envirobase T483, Medium Aluminum, is commercially available from PPG Industries, Inc. | | | | | | |

The coating compositions of Comparative Sample 4 and Sample 5 were spray applied over electrocoated steel panels. The panels were cold rolled steel panels (size 4 inches x 12 inches (10.16 cm by 30.48 cm)). The steel panels were coated with ED6060 electrocoat, available from PPG Industries, Inc, and 1177225A primer surfacer, also available from PPG Industries, Inc. The test panels are available as APR43731 from ACT Laboratories, Inc. of Hillsdale, Michigan.

The steel panels were wet sanded with P600 grit sand paper, washed with water, and dried.

The compositions of Comparative Sample 4 and Sample 5 were hand-spray applied over the prepared steel panels using a DeVilbiss GTI HVLP gravity feed spray gun equipped with a 413 needle, 1.2 air nozzle, and No. 2000 air cap. Air pressure at the base of the gun was 28 Ibs/inch2 (2 kg/cm3). The composition of Comparative Sample 4 was reduced 10% by weight with deionized water prior to spray, and the composition of Sample 5 was sprayed with no additional modifications.

Each liquid coating composition was applied in two coats with an approximate 5 minute flash between coats at about 70°F (21°C) temperature and about 68% relative humidity. A black and white hiding chart indicated the basecoat film build achieved complete hiding of the substrate. The coating was allowed to ambient flash about 30 minutes prior to clearcoat application.

The clearcoat was hand-spray applied using the same spray gun as was used for the other coatings. The clearcoat was Concept® DCU2055 Clear available from PPG Industries, Inc. The clearcoat was mixed with DCX61 High Solids Hardener (PPG Industries, Inc.) and D871 Medium Thinner (PPG Industries, Inc.) at a volumetric ratio of 3:1:0.5. The clearcoat was applied in two coats with a 10 minute ambient flash between the coats at about 70°F (21°C) temperature and about 68% relative humidity. A dry film thickness of about 44.5 - 48.3 µm (1.75-1.90 mils) was achieved. The panels were allowed to ambient cure in a horizontal position for 7 days prior to testing.

The cured panels were tested for dry film thickness, 20 degree gloss, distinctness of image, Konig Hardness, and adhesion. General visual observations of the cured films were also noted. Dry film thickness was measured using the Fisherscope MMS (Multi-measuring System) instrument. The appropriate probe was chosen to measure the dry film thickness of each coating. The value is reported in Table 6 in mils. The 20 degree gloss was measured using a BYK Gardner micro-TRI-gloss instrument. Distinctness of image (DOI) was measured using a "C-Box" Model GB11-8 from Instruments for Research and Industries (I2R) of Cheltenham, PA. Konig Hardness was measured using the instrument and procedure described in Example 10.

The procedure for measuring DOI involved placing the coated substrate on a flat surface underneath the C-Box. The light inside the C-Box was turned on so the reflectance of the coated surface could be used to read the image of Landolt rings ("C's") on the underside of the C-Box. The coated surface was visually examined at approximately 15 to 30 degrees from normal at a distance of 25 to 30 centimeters (10 to 12 inches). Each series of rings has a corresponding numeric value (10-100 in increments of 10) with 100 representing the smallest ring size and 10 representing the largest ring size. The coated substrate was assigned a DOI measurement by first determining the highest value where an entire group of "C's" was discernible in the reflectance of the coated surface. Second, the next smaller size pattern was observed. If there were only a few openings of the "C's" visible, then a rating of the entirely visible pattern was recorded. If at least 50 percent of the "C's" openings were visible in the smaller size pattern, then a rating halfway between the two patterns was recorded.

Adhesion of each cured coating to the substrate was measured by cutting two sets of ten (10) parallel lines through the cured coating to the substrate surface using a cutting edge. First, ten parallel lines were cut spaced two (2) millimeters apart with the aid of a spacing template. Each line was approximately two (2) inches in length. Then, a second set of ten (10) parallel lines was cut perpendicular to the first set. Each line was also approximately two (2) inches in length. The result was a grid of 100 squares. A piece of 3M Tape #898 (approximately 3 inches long) was placed over the scribed grid and firmly smoothed to ensure good contact. Within ninety (90) seconds of tape application, the tape was rapidly pulled off in one continuous motion. The pulling action was directed toward the test performer while keeping the tape as close as possible to a 60-degree angle. The reported value represents the percentage of film remaining on the substrate. Therefore, one hundred (100) means no failure.

Results from the above tests can be seen in Table 6.

**Table 6**

| | Dry film Thickness (mils) *µ*m | 20 Gloss | Distinctness of Image (DOI) | Konig Hardness (seconds) | Adhesion |
|---|---|---|---|---|---|
| Comparative Sample 4 | (0.31-0.32) 7.9 - 8.1 | 90 | 30 | 61 | 70 |
| Sample 5 | (0.50-0.54) 12.7 - 13.7 | 84 | 60 | 50 | 100 |

The composition of Sample 5 which contained the aqueous dispersion of the present invention had better overall adhesion and DOI than that of Comparative Sample 4. Konig Hardness was slightly softer which could be explained by the higher dry film thickness of Sample 5. 20 degree gloss was acceptable for both films.

Visual inspection of the coatings of Comparative Sample 4 and Sample 5 showed Sample 5 had a brighter and more vibrant blue appearance on the face of the panel and a darker flop as the panels were viewed at a 45 degree angle.

### EXAMPLE AA

This example describes the preparation of a polyurethane / urea dispersant which was subsequently used to the form the respective aqueous dispersion of Example DD. The polyurethane / urea dispersant was prepared from the following ingredients:

| **Ingredients** | **Equivalents** | **Weight (grams)** |
|---|---|---|
| **Charge I** | | |
| N-methyl pyrrolidinone | | 269.8 |
| Hydroxyethyl methacrylate (HEMA) | 0.70 | 91.1 |
| Dimethylolpropionic acid (DMPA) | 3.50 | 234.7 |
| Triphenyl phosphite | | 2.2 |
| Dibutyltin dilaurate | | 2.2 |
| Butylated hydroxytoluene | | 2.2 |

| **Charge II** | | |
|---|---|---|
| Poly (butylene oxide)¹² | 1.40 | 700.0 |

| **Charge III** | | |
|---|---|---|
| Methylene bis(4-cyclohexylisocyanate) | 8.40 | 1100.4 |

| **Charge IV** | | |
|---|---|---|
| Butyl methacrylate | | 481.8 |

| **Charge V** | | |
|---|---|---|
| Butyl acrylate | | 642.5 |

| **Charge VI** | | |
|---|---|---|
| Deionized water | | 4263.3 |
| Dimethylethanolamine | 1.40 | 124.7 |
| Diethanolamine | 0.70 | 73.6 |
| Ethylenediamine | 1.40 | 42.1 |

| | | |
|---|---|---|
| ¹ Poly (butylene oxide) having a number average molecular weight of 1000. | | |

Charge I was stirred in the flask at a temperature of 100°C until all solids were dissolved. Charge II was added and the mixture was reheated to 70°C. Charge III was added over a 15 minute period. Charge IV was added and the resulting mixture was held at 90°C for 3 hours. Charge V was added. Charge VI was stirred in a separate flask and heated to 70°C. The reaction product of Charges I, II, III, IV, and V was added to Charge VI and the resulting mixture was cooled to room temperature. The final product was a white emulsion with an acid value of 15.2, a Brookfield viscosity of 800 centipoise (spindle #3 at 60 rpm), a pH of 7.4, and a nonvolatile content of 28.4% as measured at 110°C for one hour.

### EXAMPLE BB

This example describes the preparation of an acrylic dispersant which was subsequently used to form the respective pigment dispersion of Example C. The acrylic dispersant was prepared from the following ingredients in the ratios indicated:

| **Ingredients** | **Weight (grams)** |
|---|---|
| **Charge I** | |
| Magnesol | 20.0 |
| Toluene | 120.0 |

| **Charge II** | |
|---|---|
| 2,2'-dipyridyl | 7.5 |
| Copper (0) powder | 6.1 |

| **Charge III** | |
|---|---|
| Para-toluenesulfonyl chloride | 30.4 |

| **Charge IV** | |
|---|---|
| Benzylmethacrylate | 169.2 |
| Glycidyl isopropyl ether | 20.0 |

| **Charge V** | |
|---|---|
| MPEG (550) MA | 888.3 |
| Toluene | 250.0 |

Charge I was mixed in a 2 liter flask with air-stirrer, thermocouple and azeotropic distillation set-up. Charge I was heated to reflux and water was azeotroped off. Charge I was then cooled and put under a nitrogen blanket. Charges II and III were added in order while maintaining a nitrogen blanket. Charge IV was added to an addition funnel and sparged with nitrogen for 15 minutes prior to addition. Charge IV was added to the reaction flask and the mixture was heated carefully to 70 °C. When the solids reached 60.7%, Charge V was charged to an addition funnel and sparged with nitrogen for 15 minutes. Charge V was added to the reaction over 30 minutes while maintaining a 70 °C reaction temperature. The reaction was heated for 6 hours and then cooled and stirred overnight under a nitrogen blanket. The reaction mixture was thinned with 500 g of toluene and then filtered through a cake of magnesol to remove the residual catalyst. Solvent was removed under vacuum yielding a resin at 98.4% solids. The number average molecular weight (Mn) was 7469. The weight average molecular weight (Mw) was 9212. Mw/Mn was 1.2.

### EXAMPLE CC

This example describes the preparation of a nano-sized phthalocyanine blue pigment dispersion (at a P:B of 15:3) which was subsequently used to form the aqueous dispersion of Example 13. The pigment dispersion was prepared from a batch of the following mixture of ingredients in the ratios indicated:

| **Ingredients** | **Weight (grams)** |
|---|---|
| Deionized water | 2077.4 |
| Acrylic dispersant of Example BB | 1360.8 |
| Dimethylethanolamine | 10.2 |
| PB 15:3 pigment² | 2358.7 |

| | |
|---|---|
| ² PB 15:3, phthalocyanine blue pigment, commercially available from BASF Corp. | |

The ingredients were ground in an Advantis V15 Drais mill containing 0.3 mm YTZ grinding media. The mixture was milled at 1650 rpm for a total residence time of 218 minutes. The progress of the milling was monitored by measuring the visible spectra of samples and observing the decrease in absorbance at a wavelength of 400 nanometers. During the course of the milling 4535.9g of water and 544.3g propylene glycol monobutyl ether was added to make a final mixture with a nonvolatile content of 24.4% as measured at 110°C for one hour. The particle size was 139 nm. The percent haze was 1.0% measured at a transmittance of about 17.5% at the wavelength of maximum absorbance as described above.

### EXAMPLE DD

This example describes the preparation of an aqueous dispersion of microparticles which contains nano-sized PB 15:3 phthalocyanine blue pigment. The dispersion was prepared from the following ingredients:

| **Ingredients** | **Weight (grams)** |
|---|---|
| **Charge I** | |
| Polyurethane / urea of Example AA | 578.6 |
| Blue pigment dispersion of Example CC | 432.0 |
| Propylene glycol monobutyl ether | 90.0 |
| Butyl acrylate | 57.0 |

| **Charge II** | |
|---|---|
| Deionized water | 40.0 |

| **Charge III** | |
|---|---|
| Sodium metabisulfite | 0.6 |
| Ferrous ammonium sulfate | 0.01 |
| Deionized water | 10.0 |

| **Charge IV** | |
|---|---|
| 70% t-butyl hydroperoxide | 0.6 |
| Deionized water | 10.0 |

A pre-emulsion was made by stirring Charge I with a cowles blade in a stainless steel beaker. The pre-emulsion was passed twice through a Microfluidizer© M110T at 55.2 MPa (8000 psi) and transferred to a fourneck round bottom flask equipped with an overhead stirrer, condenser, electronic temperature probe, and a nitrogen atmosphere. Charge II was used to rinse the Microfluidizer© and added to the flask. The temperature of the microemulsion was adjusted to 30°C. The polymerization was initiated by adding Charge III followed by a 30 minute addition of Charge IV. The temperature of the reaction increased to 43°C. The final pH of the latex was 7.0, the nonvolatile content was 32.6%, and the Brookfield viscosity was 56 cps (spindle #2, 60 rpm).

The aqueous dispersion of microparticles of Example DD was used to prepare the following protective coating composition designated as Example EE described below.

### EXAMPLE EE

This example describes the preparation of a protective coating composition. The following components were added under mild agitation in the order shown below:

| Component (by weight) | Weight (grams) | Solids |
|---|---|---|
| Blue aqueous dispersion of Example DD | 93.47 | 26.15 |
| Diisopropyl amine | 0.43 | --- |
| Aquaflow NLS210 Solution¹⁴ | 1.15 | 0.13 |
| Baysilone 3739¹⁵ | 0.23 | 0.17 |
| Water Reducible Polyurethane¹⁶ | 6.96 | 2.61 |
| Deionized Water | 22.00 | --- |

| | | |
|---|---|---|
| ¹⁴Aquaflow NLS 210 rheology modifier, commercially available from Hercules, Inc. was used to prepare the following pre-solution: Deionized water; Diethylene glycol monobutyl ether; Aquaflow NLS 210 at 20 / 5 / 20 weight ratio respectively. ¹⁵Baysilone 3739, polyether-modified methyl polysiloxane commercially available from Bayer Corporation. ¹⁶Water-reducible polyurethane resin formed from adipic acid dihydrazide, dimethylol propionic acid, poly (tetramethylene ether) glycol, isophorone diisocyanate (3.0 / 6.1 / 68.2 / 22.7 weight ratio) at 37.5% solids in dimethylethanol amine, methyl ethyl ketone, and deionized water (2.6 / 0.8 / 96.6 weight ratio). | | |

The composition of Example EE above was evaluated versus Envirobase T412 Transparent Blue Basecoat (commercially available from PPG Industries, Inc.) designated as Comparative Example FF. Both coating compositions were spray applied over electrocoated 4x12 inch panels available as APR 43741 from ACT Laboratories, Inc. of Hillsdale, Michigan. The panels were wet sanded with P600 grit sand paper, washed with water, and dried. Each of the blue basecoat compositions was hand-spray applied over the prepared panels using a DeVilbiss GTI HVLP gravity feed spray gun equipped with a 413 needle, 1.2 air nozzle, and No. 2000 air cap. Air pressure at the base of the gun was 28 Ibs/inch2 (2 kg/cm3). Envirobase T412 Transparent Blue Basecoat (Comparative Example FF) was prepared for spray application as instructed on the product data sheet. Each of the respective coating compositions was applied in two coats with an approximate 5 minute flash between coats at a temperature of about 70°F (21°C) at about 68% relative humidity. The coating was allowed to ambient flash about 30 minutes prior to clearcoat application.

Concept® DCU2055 Clear coat, available from PPG Industries, Inc. was then applied to the basecoated panels. The clear coat was mixed with DCX61 High Solids Hardener (PPG Industries, Inc.) and D871 Medium Thinner (PPG Industries, Inc.) at a volumetric ratio of 3:1:0.5. The clearcoat was hand spray applied in two coats with a 10 minute ambient flash between the coats at about 70°F (21°C) temperature and about 40% relative humidity. A dry film thickness of about 1.50-1.90 mils (36.8 to 48.3 micrometers) was achieved. The panels were allowed to ambient cure in a horizontal position for 7 days prior to testing. The panels were tested for dry film thickness, initial 20 degree gloss, initial adhesion as well as 20 degree gloss and adhesion after 10 days humidity testing.

Dry film thickness was measured using the Fisherscope MMS (Multi-measuring System) instrument. The appropriate probe was chosen to measure the dry film thickness of each coating. The value is reported in the table below in mils. The 20 degree gloss was measured using a BYK Gardner micro-TRI-gloss instrument.

Adhesion of the cured coating to the substrate was measured by cutting two sets of six (6) parallel lines through the cured coating to the substrate surface using a cutting edge. First, six parallel lines were cut spaced two (2) millimeters apart with the aid of a spacing template. Each line was approximately two (2) inches in length. Then, a second set of six (6) parallel lines was cut perpendicular to the first set. Each line was also approximately two (2) inches in length. The result was a grid of 25 squares. A piece of 3M Tape #898 (approximately 3 inches long) was placed over the scribed grid and firmly smoothed to ensure good contact. Within ninety (90) seconds of tape application, the tape was rapidly pulled off in one continuous motion. The pulling action was directed toward the test performer while keeping the tape as close as possible to a 60-degree angle. The reported value represents the percentage of film remaining on the substrate, that is, 100% means no failure.

Humidity resistance was tested by exposing test panels to an environment with a relative humidity of 95% to 100% and a temperature of 40°C (104°F). The panels were kept in this environment for ten (10) days and then removed for testing. All tests were performed within one hour from the time the test was ended. Test results are presented in the table below.

| Example # | Dry Film Thickness (mils) µm | | Initial 20 degree gloss | Initial Adhesion (%) | Post Humidity 20 degree gloss | Post Humidity Adhesion (%) |
|---|---|---|---|---|---|---|
| | BC | CC | | | | |
| Comparative Example FF | (0.34) 8.6 | (1.50-1.90) 38.1-48.3 | 89 | 100 | 88 | 50 |
| Example EE | (1.00) 25.4 | (1.50-1.90) 38.1-48.3 | 88 | 100 | 81 | 75 |

## Claims

1. A method for preparing a stable aqueous dispersion of microparticles, said microparticles comprising nanoparticulates, the method comprising the following steps:
(a) providing a plurality of nanoparticulates having an average particle size of 300 nanometers or less,
(b) admixing said nanoparticulates with a mixture of one or more polymerizable unsaturated monomers with one or more polymers, wherein the one or more polymers have a weight average molecular weight ranging from 1000 to 20,000 to form an admixture;
(c) subjecting said admixture to high stress shear conditions in the presence of an aqueous medium to particularize the admixture into microparticles; and
(d) polymerizing said ethylenically unsaturated monomers under free radical polymerization conditions; wherein
the microparticles comprise composite microparticles having a first phase comprising one or more polymers, and a second phase comprising the nanoparticulates.

2. The method of claim 1, wherein step (b) is carried out in the presence of an aqueous medium.

3. The method of claim 1, wherein the aqueous dispersion is prepared by the following steps:
(a) providing a plurality of nanoparticulates having an average particle size of 300 nanometers or less;
(b) admixing, optionally in the presence of an aqueous medium, said nanoparticulates with a mixture of one or more polymerizable ethylenically unsaturated monomers, and one or more polymers to form an admixture;
(c) subjecting said admixture to high stress shear conditions in the presence of an aqueous medium to form composite microparticles dispersed in the aqueous medium, the microparticles comprising the one or more polymerizable ethylenically unsaturated monomers and one or more polymers in a first phase, and the nanoparticulates in a second phase; and
(d) polymerizing said ethylenically unsaturated monomers under free radical polymerization conditions.

4. The method of any of the preceding claims, wherein the nanoparticulates comprise color-imparting nanopartiuclates.

5. The method of any of the preceding claims, wherein said nanoparticulates have an average particle size ranging from 1 to 200 nanometers, preferably from 1 to 150 nanometers, more preferred from 1 to 50 nanometers.

6. The method of any of claims 1 or 4, wherein the second phase comprises organic and/or inorganic nanoparticulates.

7. The method of claim 6, wherein the second phase comprises inorganic nanoparticulates.

8. The method of claim 7, wherein the nanoparticulates comprise inorganic nanoparticulates selected from colloidal silica, fumed silica, amorphous silica, alumina, colloidal alumina, titanium dioxide, iron oxide, cesium oxide, yttrium oxide, colloidal yttria, colloidal zirconia, amorphous zirconia, and mixtures thereof.

9. The method of claim 7, wherein the nanoparticulates comprise mixed metal oxides.

10. The method of claim 7, wherein the nanoparticulates are inorganic nanoparticulates comprising aluminum silicate, magnesium silicate, and mixtures thereof.

11. The method of claim 8, wherein the second phase comprises organic nanoparticulates.

12. The method of claim 11, wherein the organic nanoparticulates comprise organic pigments selected from perylenes, quinacridones, phthalocyanines, isoindolines, dioxazines (that is, triphenedioxazines), 1,4-diketopyrrolopyrroles, anthrapyrimidines, anthanthrones, flavanthrones, indanthrones, perinones, pyranthrones, thioindigos, 4,4'-diamino-1,1'-dianthraquinonyl, azo compounds, substituted derivatives thereof, and mixtures thereof.

13. The method of claim 11, wherein the organic nanoparticulates comprise carbon black.

14. The method of any of claims 1 or 4, wherein the nanoparticulates are present in the dispersion in an amount ranging from 0.1 to 50 weight percent based on weight of total solids present in the dispersion.

15. The method of claim 1, wherein the one or more polymers comprises a polymer selected from acrylic polymers, polyurethane polymers, polyester polymers, polyether polymers, silicon-based polymers, co-polymers thereof, and mixtures thereof.

16. The method of claim 15, wherein the one and more polymers further comprises an aminoplast resin and/or a polyisocyanate.

17. The method of claim 1, wherein the acid value of the mixture of b) is less than or equal to 30 mg. KOH/g.

18. A stable aqueous dispersion of microparticles comprising nanoparticulates, said dispersion being prepared by the method of any of claims 1-17.

19. A coating composition comprising a stable aqueous dispersion of microparticles according to claim 18.

20. The coating composition of claim 19, wherein the one or more polymers are present in the aqueous dispersion in an amount ranging from 20 to 60 weight percent based on weight of total solids present in the aqueous dispersion.

21. An electrodepositable coating composition comprising a resinous phase dispersed in an aqueous medium, said resinous phase comprising:
(a) an active hydrogen-containing, ionic group-containing electrodepositable resin;
(b) a curing agent having functional groups reactive with the active hydrogens of (a); and
(c) a stable aqueous dispersion of composite microparticles prepared by the method of claim 1.

22. A coated substrate comprising an electroconductive substrate, and a coating formed over at least a portion of the substrate from the electrodepositable coating composition of claim 21.

## Patentansprüche

1. Verfahren zur Herstellung einer stabilen wässrigen Dispersion von Mikroteilchen, wobei diese Mikroteilchen Nanoteilchen enthalten und das Verfahren die folgenden Schritte umfasst:
(a) Bereitstellen einer Vielzahl von Nanoteilchen mit einer mittleren Teilchengröße von 300 nm oder weniger,
(b) Mischen dieser Nanoteilchen mit einer Mischung von einem oder mehreren polymerisierbaren ungesättigten Monomeren mit einem oder mehreren Polymeren, wobei das eine oder die mehreren Polymere ein gewichtsmittleres Molekulargewicht im Bereich von 1.000 bis 20.000 aufweisen, um eine Mischung zu bilden,
(c) Aussetzen dieser Mischung an Scherbedingungen hoher Belastung in Gegenwart eines wässrigen Mediums, um die Mischung in Mikroteilchen zu zerteilen, und
(d) Polymerisieren dieser ethylenisch ungesättigten Monomere unter Radikalpolymerisationsbedingungen, wobei
die Mikroteilchen Verbundmikroteilchen mit einer ersten Phase, die ein oder mehrere Polymere enthält, und einer zweiten Phase, die Nanoteilchen enthält, enthalten.

2. Verfahren nach Anspruch 1, wobei Schritt (b) in Gegenwart eines wässrigen Mediums durchgeführt wird.

3. Verfahren nach Anspruch 1, wobei die wässrige Dispersion durch die folgenden Schritte hergestellt wird:
(a) Bereitstellen einer Vielzahl von Nanoteilchen mit einer mittleren Teilchengröße von 300 nm oder weniger,
(b) Mischen optional in Gegenwart eines wässrigen Mediums dieser Nanoteilchen mit einer Mischung von einem oder mehreren polymerisierbaren ethylenisch ungesättigten Monomeren und einem oder mehreren Polymeren, um eine Mischung zu bilden,
(c) Aussetzen dieser Mischung an Scherbedingungen hoher Belastung in Gegenwart eines wässrigen Mediums, um Verbundmikroteilchen zu bilden, die in dem wässrigen Medium dispergiert sind, wobei die Mikroteilchen, das ein oder die mehreren polymerisierbaren ethylenisch ungesättigten Monomere und ein oder mehrere Polymere in einer ersten Phase und die Nanoteilchen in einer zweiten Phase enthalten, und
(d) Polymerisieren dieser ethylenisch ungesättigten Monomere unter Radikalpolymerisationsbedingungen.

4. Verfahren nach einem der vorstehenden Ansprüche, wobei die Nanoteilchen farbgebende Nanoteilchen umfassen.

5. Verfahren nach einem der vorstehenden Ansprüche, wobei diese Nanoteilchen eine mittlere Teilchengröße im Bereich von 1 bis 200 nm, vorzugsweise von 1 bis 150 nm, bevorzugter von 1 bis 50 nm aufweisen.

6. Verfahren nach einem der Ansprüche 1 oder 4, wobei die zweite Phase organische und/oder anorganische Nanoteilchen enthält.

7. Verfahren nach Anspruch 6, wobei die zweite Phase anorganische Nanoteilchen enthält.

8. Verfahren nach Anspruch 7, wobei die Nanoteilchen anorganische Nanoteilchen, ausgewählt aus kolloidaler Kieselsäure, pyrogener Kieselsäure, amorpher Kieselsäure, Aluminiumoxid, kolloidalem Aluminiumoxid, Titandioxid, Eisenoxid, Caesiumoxid, Yttriumoxid, kolloidalem Yttriumoxid, kolloidalem Zirconiumdioxid, amorphem Zirconiumdioxid und Mischungen davon umfassen.

9. Verfahren nach Anspruch 7, wobei die Nanoteilchen gemischte Metalloxide enthalten.

10. Verfahren nach Anspruch 7, wobei die Nanoteilchen anorganische Nanoteilchen sind, die Aluminiumsilicat, Magnesiumsilicat und Mischungen davon enthalten.

11. Verfahren nach Anspruch 8, wobei die zweite Phase organische Nanoteilchen enthält.

12. Verfahren nach Anspruch 11, wobei die organischen Nanoteilchen organische Pigmente enthalten, die ausgewählt sind aus Perylenen, Chinacridonen, Phthalocyaninen, Isoindolinen, Dioxazinen (d.h. Triphendioxazinen), 1,4-Diketopyrrolopyrrolen, Anthrapyrimidinen, Anthanthronen, Flavanthronen, Indanthronen, Perinonen, Pyranthronen, Thioindigoverbindungen, 4,4'-Diamino-1,1'-dianthrachinonylverbindungen, Azoverbindungen, substitutierten Derivativen davon und Mischungen davon.

13. Verfahren nach Anspruch 11, wobei die organischen Nanoteilchen Russ enthalten.

14. Verfahren nach einem der Ansprüche 1 oder 4, wobei die Nanoteilchen in der Dispersion in einer Menge im Bereich von 0,1 bis 50 Gew.-%, bezogen auf das Gewicht der in der Dispersion vorhandenen Gesamtfeststoffe, vorhanden sind.

15. Verfahren nach Anspruch 1, wobei das eine oder die mehreren Polymere ein Polymer beinhalten, ausgewählt aus Acrylpolymeren, Polyurethanpolymeren, Polyesterpolymeren, Polyetherpolymeren, Polymeren auf Siliciumbasis, Copolymeren davon und Mischungen davon.

16. Verfahren nach Anspruch 15, wobei das eine oder die mehreren Polymere zusätzlich ein Aminoplastharz und/oder ein Polyisocyanat enthalten.

17. Verfahren nach Anspruch 1, wobei der Säurewert der Mischung aus b) ≤ 30 mg KOH/g ist.

18. Stabile wässrige Dispersion von Mikroteilchen, enthaltend Nanoteilchen, wobei diese Dispersion hergestellt ist durch das Verfahren nach einem der Ansprüche 1-17.

19. Beschichtungszusammensetzung, enthaltend eine stabile wässrige Dispersion von Mikroteilchen gemäß Anspruch 18.

20. Beschichtungszusammensetzung nach Anspruch 19, wobei das eine oder die mehreren Polymere in der wässrigen Dispersion in einer Menge vorhanden sind, die von 20 bis 60 Gew.-%, bezogen auf das Gewicht der in der wässrigen Dispersion vorhandenen Gesamtfeststoffe, reicht.

21. Elektrophoretisch abscheidbare Beschichtungszusammensetzung, enthaltend eine Harzphase, die in dem wässrigen Medium dispergiert ist, wobei diese Harzphase enthält:
(a) ein aktiven Wasserstoff enthaltendes, ionische Gruppen enthaltendes elektrophoretisch abscheidbares Harz,
(b) ein Härtungsmittel mit funktionellen Gruppen, die mit den aktiven Wasserstoffatomen von (a) reaktiv sind, und
(c) eine stabile wässrige Dispersion von Verbundmikroteilchen, hergestellt durch das Verfahren nach Anspruch 1.

22. Beschichtetes Substrat, enthaltend ein elektrisch leitfähiges Substrat und eine Beschichtung, die auf wenigstens einem Teil des Substrats aus der elektrophoretisch abscheidbaren Beschichtungszusammensetzung nach Anspruch 21 gebildet ist.

## Revendications

1. Procédé de préparation d'une dispersion aqueuse stable de microparticules, lesdites microparticules comprenant des nanoparticules, le procédé comprenant les étapes suivantes :
(a) fourniture d'une pluralité de nanoparticules ayant une taille moyenne de particules de 300 nanomètres ou moins ;
(b) mélange desdites nanoparticules avec un mélange d'un ou plusieurs monomères insaturés polymérisables avec un ou plusieurs polymères, dans lequel les un ou plusieurs polymères ont une masse moléculaire moyenne dans la plage de 1 000 à 20 000 pour former un mélange ;
(c) soumission dudit mélange à des conditions de contraintes de cisaillement élevées en présence d'un milieu aqueux pour transformer le mélange en microparticules ; et
(d) polymérisation desdits monomères éthyléniquement insaturés dans des conditions de polymérisation des radicaux libres ; dans lequel
les microparticules comprennent des microparticules composites ayant une première phase comprenant un ou plusieurs polymères, et une seconde phase comprenant les nanoparticules.

2. Procédé selon la revendication 1, dans lequel l'étape (b) est réalisée en présence d'un milieu aqueux.

3. Procédé selon la revendication 1, dans lequel la dispersion est préparée par les étapes suivantes :
(a) fourniture d'une pluralité de nanoparticules ayant une taille moyenne de particules de 300 nanomètres ou moins ;
(b) mélange, facultativement en présence d'un milieu aqueux, desdites nanoparticules avec un mélange d'un ou plusieurs monomères éthyléniquement insaturés polymérisables, et d'un ou plusieurs polymères pour former un mélange ;
(c) soumission dudit mélange à des conditions de contraintes de cisaillement élevées en présence d'un milieu aqueux pour former des microparticules composites dispersées dans le milieu aqueux, les microparticules comprenant un ou plusieurs monomères éthyléniquement insaturés polymérisables et un ou plusieurs polymères dans une première phase, et les nanoparticules dans une seconde phase ; et
(d) polymérisation desdits monomères éthyléniquement insaturés dans des conditions de polymérisation des radicaux libres.

4. Procédé selon l'une quelconque des revendications précédentes, dans lequel les nanoparticules comprennent des nanoparticules appliquant une couleur.

5. Procédé selon l'une quelconque des revendications précédentes, dans lequel lesdites nanoparticules ont une taille moyenne de nanoparticules dans la plage de 1 à 200 nanomètres ; de préférence de 1 à 150 nanomètres, de manière davantage préférée de 1 à 50 nanomètres.

6. Procédé selon l'une quelconque des revendications 1 ou 4, dans lequel la seconde phase comprend des nanoparticules organiques et/ou inorganiques.

7. Procédé selon la revendication 6, dans lequel la seconde phase comprend des nanoparticules inorganiques.

8. Procédé selon la revendication 7, dans lequel les nanoparticules comprennent des nanoparticules inorganiques sélectionnées parmi la silice colloïdale, la silice fumée, la silice amorphe, l'alumine, l'alumine colloïdale, le dioxyde de titane, l'oxyde de fer, l'oxyde de césium, l'oxyde d'yttrium, l'yttria colloïdal, la zircone colloïdale, la zircone amorphe, et leurs mélanges.

9. Procédé selon la revendication 7, dans lequel les nanoparticules comprennent des oxydes de métaux mixtes.

10. Procédé selon la revendication 7, dans lequel les nanoparticules sont des nanoparticules inorganiques comprenant du silicate d'aluminium, du silicate de magnésium, et leurs mélanges.

11. Procédé selon la revendication 8, dans lequel la seconde phase comprend des nanoparticules organiques.

12. Procédé selon la revendication 11, dans lequel les nanoparticules organiques comprennent des pigments organiques sélectionnés parmi les pérylènes, les quinacridones, les phtalocyanines, les isoindolines, les dioxazines (en d'autres termes, les triphènedioxazines), les 1,4-dicétopyrrolopyrroles, les anthrapyrimidines, les anthanthrones, les flavanthrones, les indanthrones, les périnones, les pyranthrones, les thioindigos, le 4,4'-diamino-1,1-dianthraquinonyle, les composés azoïques, leurs dérivés substitués, et leurs mélanges.

13. Procédé selon la revendication 11, dans lequel les nanoparticules organiques comprennent du noir de carbone.

14. Procédé selon l'une quelconque des revendications 1 ou 4, dans lequel les nanoparticules sont présentes dans la dispersion en une quantité dans la plage de 0,1 à 50 % en poids sur la base du poids du total des matières solides présentes dans la dispersion.

15. Procédé selon la revendication 1, dans lequel les un ou plusieurs polymères comprennent un polymère sélectionné parmi les polymères acryliques, les polymères de polyuréthane, les polymères de polyester, les polymères de polyéther, les polymères à base de silicium, leurs copolymères, et leurs mélanges.

16. Procédé selon la revendication 15, dans lequel les un ou plusieurs polymères comprennent en outre une résine aminoplaste et/ou un polyisocyanate.

17. Procédé selon la revendication 1, dans lequel l'indice d'acide du mélange de b) est inférieur ou égal à 30 mg de KOH/g.

18. Dispersion aqueuse stable de microparticules comprenant des nanoparticules, ladite dispersion étant préparée par le procédé selon l'une quelconque des revendications 1 à 17.

19. Composition de revêtement comprenant une dispersion aqueuse stable de microparticules selon la revendication 18.

20. Composition de revêtement selon la revendication 19, dans laquelle les un ou plusieurs polymères sont présents dans la dispersion aqueuse en une quantité dans la plage de 20 à 60 % en poids sur la base du poids du total des matières solides présentes dans la dispersion aqueuse.

21. Composition de revêtement pouvant être électrodéposée comprenant une phase résineuse dispersée dans un milieu aqueux, ladite phase résineuse comprenant :
(a) une résine pouvant être électrodéposée contenant un hydrogène actif et contenant un groupe ionique,
(b) un agent de durcissement ayant des groupes fonctionnels réactifs avec les hydrogènes actifs de (a) ; et
(c) une dispersion aqueuse stable de microparticules composites préparée par le procédé selon la revendication 1.

22. Substrat revêtu comprenant un substrat électroconducteur, et un revêtement formé sur au moins une partie du substrat à partir de la composition de revêtement pouvant être électrodéposée selon la revendication 21.
